(19) Europäisches Patentamt
European Patent Office
Office européen des brevets

(11) EP 3 931 166 B1

(12) **FASCICULE DE BREVET EUROPEEN**

(45) Date de publication et mention de la délivrance du brevet:
**09.08.2023 Bulletin 2023/32**

(21) Numéro de dépôt: **20705747.2**

(22) Date de dépôt: **25.02.2020**

(51) Classification Internationale des Brevets (IPC):
***C04B 103/52*** (2006.01) ***C04B 28/02*** (2006.01)

(52) Classification Coopérative des Brevets (CPC):
(C-Sets disponibles)
**C04B 28/02;** C04B 2103/52; Y02P 40/10 (Cont.)

(86) Numéro de dépôt international:
**PCT/EP2020/054878**

(87) Numéro de publication internationale:
**WO 2020/173927 (03.09.2020 Gazette 2020/36)**

(54) **PROCÉDÉ DE BROYAGE DE LIANT HYDRAULIQUE**

VERFAHREN ZUR SCHLEIFEN EINES HYDRAULISCHEN BINDEMITTELS

METHOD FOR GRINDING A HYDRAULIC BINDER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.02.2019 FR 1901879**

(43) Date de publication de la demande:
**05.01.2022 Bulletin 2022/01**

(73) Titulaire: **Chryso**
**92440 Issy-Les-Moulineaux (FR)**

(72) Inventeurs:
- **OYTUN YAZAN, Hüseyin**
**77210 AVON (FR)**
- **GUILLOT, Laurent**
**27200 VERNON (FR)**
- **BOUSTINGORRY, Pascal**
**91650 BREUILLET (FR)**

(74) Mandataire: **Lavoix**
**2, place d'Estienne d'Orves**
**75441 Paris Cedex 09 (FR)**

(56) Documents cités:
**WO-A1-2014/003972**
**US-A- 3 776 477**
**US-A1- 2017 226 011**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C04B 28/02, C04B 24/02, C04B 24/122, C04B 40/0028;**
C04B 2103/52, C04B 24/122

## Description

La présente invention concerne un procédé de broyage de liant hydraulique, tel que du ciment.

Le procédé de préparation d'un liant hydraulique inclut son broyage afin de réduire la granulométrie des particules qu'il contient et ainsi augmenter sa réactivité et lui conférer les propriétés rhéologiques désirées.

L'utilisation d'un agent de mouture (« grinding aid » en anglais) permet d'améliorer le rendement du broyage du liant hydraulique. Les agents de mouture permettent :

- une augmentation de la production lors du broyage pour une même consommation d'énergie et une même finesse, ou
- une augmentation de la finesse pour une même consommation d'énergie.

Lorsqu'un broyeur horizontal comprenant plusieurs chambres de broyage est utilisé pour le broyage d'un liant hydraulique, l'(les) agent(s) de mouture est(sont) introduit(s) dans la première chambre du broyeur, avec le liant hydraulique à broyer ou séparément.

US 2017/226011 décrit un procédé de broyage de liant hydraulique comprenant : l'introduction d'un liant hydraulique, et d'une composition comprenant au moins un agent de mouture, dans la chambre d'un broyeur horizontal ce par quoi une composition comprenant le liant hydraulique et la composition de l'adjuvant est obtenue dans la chambre. Ensuite un deuxième adjuvant de mouture qui est un aminoalcool est ajouté séparément.

US 3 776 477 A décrit un broyeur comprenant au moins un diaphragme qui délimite les chambres et qui sert notamment au broyage du ciment.

Il existe un besoin de développer un procédé de broyage de liant hydraulique permettant d'améliorer la qualité du liant hydraulique broyé (finesse Blaine et/ou distribution de la taille de particules notamment) et/ou d'améliorer le rendement du broyage afin de de réduire les coûts.

A cet effet, selon un premier objet, l'invention concerne un procédé de broyage de liant hydraulique comprenant :

a) l'introduction :

- d'un liant hydraulique, et
- d'une composition B comprenant au moins un agent de mouture B,

dans la première chambre d'un broyeur horizontal comprenant plusieurs chambres, dont une première chambre et une dernière chambre, chaque chambre étant séparée de la chambre adjacente par un diaphragme,
ce par quoi une composition β comprenant le liant hydraulique et la composition B est obtenue dans la première chambre,

b) le broyage de la composition β dans le broyeur horizontal, ce par quoi la composition β passe de la première chambre à la dernière chambre et une composition C broyée est obtenue en sortie de la dernière chambre,

caractérisé en ce qu'il comprend, lors de l'étape de broyage, l'introduction, dans la dernière chambre, d'une composition A comprenant au moins un agent de mouture A comprenant un aminoalcool, la composition A étant différente de la composition β.

Le procédé met en oeuvre un broyeur horizontal comprenant plusieurs chambres (parfois également appelé « compartiments »), dont une première chambre et une dernière chambre, chaque chambre étant séparée de la chambre adjacente par un diaphragme. Généralement, les chambres ont le même diamètre et/ou la dernière chambre est plus longue que la première chambre. De préférence, la charge broyante (boulets métalliques...) est de taille différente d'une chambre à l'autre.

La première chambre est la chambre dans laquelle est introduit le liant hydraulique à broyer. La dernière chambre est la chambre hors de laquelle la composition C broyée sort du broyeur. La composition C broyée comprend le liant hydraulique broyé, l'agent de mouture A et l'agent de mouture B.

Au cours du broyage, le liant hydraulique passe de la première chambre à la chambre adjacente, et ce jusqu'à la dernière chambre. Le diaphragme qui sépare deux chambres adjacentes ne laisse passer que les particules de liant hydraulique de taille suffisamment réduite pour procéder à un broyage plus fin dans la chambre adjacente qui suit. La taille des particules de liant hydraulique est donc la plus élevée dans la première chambre, et la plus faible dans la dernière chambre.

Typiquement, le broyeur a uniquement deux chambres : la première chambre et la dernière chambre (qui est alors la deuxième chambre), celles-ci étant séparées par un diaphragme.

Le broyeur est généralement un broyeur à boulets. Les boulets de la première chambre ont un diamètre moyen généralement plus élevé que ceux de la dernière chambre.

Le procédé comprend une étape a) d'introduction d'un liant hydraulique et d'une composition B comprenant au moins un agent de mouture B dans la première chambre du broyeur.

On entend par le terme « liant hydraulique » tout composé ayant la propriété de s'hydrater en présence d'eau et dont l'hydratation permet d'obtenir un solide ayant des caractéristiques mécaniques. Le liant hydraulique peut être un ciment selon la norme EN 197-1 de 2012 et notamment un ciment de type CEM I, CEM II, CEM III, CEM IV ou CEM V selon la norme Ciment NF EN 197-1 de 2012. Le ciment peut donc en particulier comprendre des additions minérales.

L'expression « additions minérales » désigne les laitiers (tels que définis dans la norme Ciment NF EN 197-1 de 2012 paragraphe 5.2.2), les laitiers d'aciérie, les matériaux pouzzolaniques (tels que définis dans la norme Ciment NF EN 197-1 paragraphe 5.2.3), les cendres volantes (telles que définies dans la norme Ciment NF EN 197-1 paragraphe 5.2.4), les schistes calcinés (tels que définis dans la norme Ciment NF EN 197-1 paragraphe 5.2.5), les calcaires (tels que définis dans la norme Ciment NF EN 197-1 paragraphe 5.2.6) ou encore les fumées de silices (telles que définies dans la norme Ciment NF EN 197-1 paragraphe 5.2.7) ou leurs compositions. D'autres ajouts, non actuellement reconnus par la norme Ciment NF EN 197-1 (2012), peuvent aussi être utilisés. Il s'agit notamment des métakaolins, tels que les métakaolins de type A conformes à la norme NF P 18-513 de 2012, et des additions siliceuses, telles que les additions siliceuses de minéralogie Qz conformes à la norme NF P 18-509 de 2012.

Dans un premier mode de réalisation, l'agent de mouture B comprend un polyol, de préférence choisi parmi :

- un diol tel qu'un alkylèneglycol comprenant de préférence de 1 à 20 atomes de carbone, notamment de 1 à 10 atomes de carbone, et dont le groupe alkylène peut être porteur d'un méthyle, et étant typiquement choisi parmi le 2-méthyl-1,3-propanediol, le monoéthylèneglycol, le diéthylèneglycol, le triéthylèneglycol, le tétraethyleneglycol, le propylène glycol et un mélange de ceux-ci,
- un triol, de préférence le glycérol,
- un tétraol, de préférence l'érythritol, et
- un mélange de ceux-ci.

L'agent de mouture B comprend par exemple un alkylène glycol, ou un mélange d'alkylène glycol, et éventuellement du glycérol, le glycérol étant de préférence présent à une proportion de 0 à 5% en poids par rapport au poids de l'ensemble (glycérol et alkylène(s) glycol).

L'agent de mouture B (et la composition B) est (sont) alors de préférence exempt d'aminoalcool, notamment de l'un de ceux listés ci-dessous.

Dans un deuxième mode de réalisation, l'agent de mouture B comprend un aminoalcool ou un de ses sels, ledit aminoalcool comprenant de préférence :

- de 2 à 8 atomes de carbones, notamment de 4 à 6 atomes de carbone, et/ou
- 1, 2 ou 3 fonctions alcool,

par exemple choisi parmi la N-méthyldiéthanolamine (MDEA), la diisopropanolamine (DIPA), la triisopropanolamine (TIPA), la triéthanolamine (TEA), l'ethanoldiisopropanol amine (EDIPA), la diéthanolisopropanolamine (DEIPA) et un mélange de celles-ci. Par exemple, l'agent de mouture B comprend de la triisopropanolamine (TIPA), la triéthanolamine (TEA) ou un mélange de celles-ci. Les sels d'aminoalcools préférés sont les chlorhydrates, tels que TEA.HCl, TIPA.HCl, EDIPA.HCl, et DEIPA.HCl.

Dans ce deuxième mode de réalisation, l'agent de mouture B (et la composition B) est (sont) de préférence exempt de polyol, notamment de l'un de ceux listé ci-dessus. Ce deuxième mode de réalisation est particulièrement adapté pour le broyage d'un liant hydraulique tendre, sur lequel les polyols pourraient induire une agglomération néfaste pour le broyage et devraient donc être évités.

Dans un troisième mode de réalisation, l'agent de mouture B comprend un polyol et un aminoalcool.

Dans le deuxième et le troisième mode de réalisation (quand l'agent de mouture B comprend un aminoalcool), l'agent de mouture B peut comprendre un acide carboxylique ou un sel de celui-ci, par exemple choisi parmi l'acide acétique ou un de ses sels, l'acide formique ou un de ses sels, ou un mélange de ceux-ci. L'agent de mouture B comprend alors un aminoalcool, un acide carboxylique ou un sel de celui-ci et éventuellement un polyol. Le sel peut être celui formé entre l'aminoalcool et l'acide carboxylique. L'acide carboxylique permet généralement d'ajuster la force dispersante de la composition B, celle-ci étant parfois trop intense lorsque l'aminoalcool est utilisé sans acide carboxylique.

L'agent de mouture B est la matière active de la composition B. La composition B peut comprendre un ou plusieurs agents de mouture B.

En plus de l'agent de mouture B, la composition B peut comprendre un solvant, généralement de l'eau. La composition B peut être constituée d'une solution aqueuse d'au moins un agent de mouture B (celui-ci étant de préférence constitué d'un ou plusieurs polyol(s), d'un ou plusieurs aminoalcool(s), ou d'un mélange de ceux-ci, et éventuellement d'un ou plusieurs acide(s) carboxylique ou un sel de celui-ci(ceux-ci)) lorsque l'agent de mouture comprend un aminoalcool), voire d'un mélange d'eau et d'agent de mouture B.

La proportion d'agent de mouture B introduite dans la première chambre à l'étape a) est typiquement de 50 à 2500 g, notamment de 75 à 500 g, de préférence de 90 à 250 g par tonne de liant hydraulique introduit dans la première chambre lors de l'étape a). En dessous, l'efficacité de l'agent de mouture est moindre et au-delà, les coûts deviennent trop importants. Il s'agit de proportion par rapport à l'agent de mouture « sec », sans prise en compte de l'éventuel solvant et des éventuels autres additifs de la composition B. Lorsque la composition B comprend plusieurs agents de mouture B, il s'agit de la somme de leurs proportions.

Les introductions du liant hydraulique d'une part et de la composition B d'autre part peuvent être simultanées ou non. De plus, les introductions du liant hydraulique et de la composition B peuvent être effectuées par des entrées distinctes de la première chambre, ou par une même entrée. Il est par exemple possible d'introduire dans la première chambre la composition β comprenant le liant hydraulique et la composition B (introduction du liant hydraulique et de la composition B simultanément et par une même entrée). De préférence, la composition B et le liant hydraulique sont introduits simultanément par une même entrée de la première chambre. Typiquement, la composition B est dispersée dans le liant hydraulique dans la trémie d'alimentation en liant hydraulique, par exemple par une rampe d'aspersion ou par un tuyau gouttant sur une trémie d'alimentation en liant hydraulique. Dans ce cas, c'est donc la composition β qui est introduite dans la première chambre du broyeur horizontal.

Le procédé comprend une étape b) de broyage de la composition β dans le broyeur, ce par quoi la composition β passe de la première chambre à la dernière chambre et une composition C broyée est obtenue en sortie de la dernière chambre. La taille moyenne de particules de la composition C est donc plus faible que celle de la composition β. La mesure de la taille moyenne de particules peut être effectuée par granulométrie laser qui donne une distribution de tailles, ou bien par tamisage sous pression qui donne typiquement une proportion massique refusée sur un tamis défini, typiquement 32, 45 et/ou 63 μm (étant entendu qu'il faut utiliser la même méthode de mesure pour comparer des tailles).

Lors de l'étape b) de broyage du procédé selon l'invention, une composition A comprenant au moins un agent de mouture A comprenant un aminoalcool est introduite dans la dernière chambre du broyeur.

Typiquement, la composition A est introduite dans la dernière chambre :

soit au niveau du diaphragme séparant la dernière chambre de la chambre adjacente, soit dans l'enceinte de la dernière chambre, dans une zone généralement plus proche du diaphragme séparant la dernière chambre de la chambre adjacente que de la sortie de la dernière chambre,

soit à la sortie de la dernière chambre, typiquement au niveau de la grille de décharge dont est munie la sortie de la dernière chambre.

Le procédé met en oeuvre au moins deux agents de mouture A et B, qui sont introduits à des endroits distincts du broyeur : l'un dans la première chambre, l'autre dans la dernière chambre.

Les inventeurs ont en effet démontré que les agents de mouture A et B ne se répartissent pas de la même façon dans l'unité de broyage : le dosage de l'agent de mouture le long de l'unité de broyage varie en fonction de la nature de l'agent de mouture. Lorsque les agents de mouture sont introduits tous les deux dans la première chambre du broyeur comme dans l'art antérieur :

- la quantité d'agent de mouture retrouvée sur les particules de liant hydraulique est essentiellement gouvernée par la surface spécifique des particules de liant hydraulique dès la sortie de la première chambre du broyeur,
- à l'intérieur de la première chambre du broyeur, lorsque l'agent de mouture B comprend un alkylène glycol, il est plus abondant par unité de surface de liant hydraulique que l'agent de mouture A comprenant un aminoalcool,
- la quantité d'agent de mouture par unité de surface de liant hydraulique se stabilise dans la seconde chambre du broyeur, et la différence entre les deux agents de mouture s'amenuise dans la dernière chambre.

L'agent de mouture A comprenant un aminoalcool a généralement une bonne capacité à fluidifier l'écoulement des particules, ce qui n'est pas le cas d'un agent de mouture comprenant un alkylène glycol. Sans vouloir être liés par une théorie particulière, au vu des résultats des exemples qui suivent, les inventeurs supposent que :

- les agents de mouture sont transportés par les particules de liant hydraulique de forte surface spécifique, et donc les particules de petites tailles,
- cet effet serait amplifié si l'agent de mouture a un effet fluidifiant, ce qui est le cas de l'agent de mouture A comprenant un aminoalcool, qui augmente le débit des particules de liant hydraulique de petite taille. L'agent de mouture A comprenant un aminoalcool est ainsi moins abondant en première chambre de broyage, qui comprend des particules de liant hydraulique de taille élevée.

Ceci montre l'intérêt d'introduire les deux agents de mouture à des endroits différents de la ligne de broyage :

l'agent de mouture B dans la première chambre pour permettre un temps de séjour suffisamment important du liant hydraulique dans le broyeur, et l'agent de mouture A comprenant un aminoalcool dans la dernière chambre, afin d'éliminer les particules de petites tailles du broyeur et/ou de fluidifier les particules de la composition C broyée et ainsi améliorer sa processabilité ultérieure et faciliter l'éventuelle séparation ultérieure (deuxième alternative décrite ci-dessous).

La composition A est différente de la composition β. Autrement dit, la composition A introduite dans la dernière chambre n'est pas la composition en train de se faire broyer dans le broyeur.

L'agent de mouture A comprend au moins un aminoalcool comprenant de préférence :

- de 2 à 8 atomes de carbones, notamment de 4 à 6 atomes de carbone, et/ou
- 1, 2 ou 3 fonctions alcool,

par exemple choisi parmi la N-méthyldiéthanolamine (MDEA), la diisopropanolamine (DIPA), la triisopropanolamine (TIPA), la triéthanolamine (TEA), l'ethanoldiisopropanol amine (EDIPA), la diéthanolisopropanolamine (DEIPA) et un mélange de celles-ci. Par exemple, l'agent de mouture A comprend de la triisopropanolamine (TIPA), la triéthanolamine (TEA) ou un mélange de celles-ci.

L'agent de mouture A peut comprendre un acide carboxylique ou un sel de celui-ci, par exemple choisi parmi l'acide acétique ou un de ses sels, l'acide formique ou un de ses sels, ou un mélange de ceux-ci. L'agent de mouture A comprend alors un aminoalcool et un acide carboxylique ou un sel de celui-ci. Le sel peut être celui formé entre l'aminoalcool et l'acide carboxylique. L'acide carboxylique permet généralement d'ajuster la force dispersante de la composition A, celle-ci étant parfois trop intense lorsque l'aminoalcool est utilisé sans acide carboxylique.

Dans un mode de réalisation, l'agent de mouture A est identique à l'agent de mouture B. La composition A peut être identique à la composition B.

Dans un autre mode de réalisation, l'agent de mouture A est différent de l'agent de mouture B. La composition A est différente de la composition B.

L'agent de mouture A est la matière active de la composition A. La composition A peut comprendre un ou plusieurs agents de mouture A.

En plus de l'agent de mouture A, la composition A peut comprendre un solvant, généralement de l'eau. La composition A peut être constituée d'une solution aqueuse d'au moins un agent de mouture A, voire d'un mélange d'eau et d'agent de mouture A.

La proportion d'agent de mouture A introduite dans la dernière chambre lors de l'étape b) est typiquement de 50 à 2500 g, notamment de 75 à 500 g, de préférence de 90 à 250 g par tonne de liant hydraulique introduit dans la première chambre lors de l'étape a). En dessous, l'efficacité de l'agent de mouture est moindre et au-delà, les coûts deviennent trop importants. Il s'agit de proportion par rapport à l'agent de mouture « sec », sans prise en compte de l'éventuel solvant et des éventuels autres additifs de la composition A. Lorsque la composition A comprend plusieurs agents de mouture A, il s'agit de la somme de leurs proportions.

Lors de l'étape b) de broyage, de l'air peut circuler depuis la première chambre vers la dernière chambre. L'air entre par la première chambre et sort par la dernière chambre. Cet air permet de déplacer les particules les plus volatiles de la composition β qui se fait broyer. Le procédé peut alors comprendre, après l'étape b) :

i) la filtration de l'air sortant de la dernière chambre, ce par quoi les particules de liant hydraulique broyées les plus volatiles sont récupérées, puis
ii) le rassemblement des particules les plus volatiles récupérées avec la composition C broyée, généralement par écoulement sous courant d'air.

Selon une première alternative, le procédé comprend, après l'étape b), une étape b1) de récupération de la composition C broyée. La composition C broyée a alors la taille/la surface spécifique désirée. Le procédé peut alors être mis en oeuvre de façon continue, semi-continue ou en lot (« batch » en anglais).

Dans cette première alternative, l'avantage principal de l'introduction de la composition A comprenant au moins un agent de mouture A comprenant un aminoalcool dans la dernière chambre est de fluidifier la composition C broyée, ce qui améliore sa processabilité ultérieure car la composition C broyée est plus fluide ce qui facilite son écoulement, par exemple, dans un silo, ou lors de la charge et de la décharge d'un camion. En effet, généralement, le dosage requis en agent de mouture A comprenant un aminoalcool afin d'avoir une fluidité acceptable de la composition C broyée est supérieur à celui requis pour un broyage efficace du liant hydraulique. Il est donc intéressant d'introduire l'agent de mouture A dans la dernière chambre du broyeur, y compris dans le mode de réalisation où il est introduit à la sortie de la dernière chambre, typiquement au niveau de la grille de décharge dont est munie la sortie de la dernière chambre.

Selon une deuxième alternative, le procédé comprend, après l'étape b) :

c) la séparation, par un séparateur, de la composition C broyée en fines et en refus d'un séparateur, où la taille moyenne des particules du refus du séparateur est supérieure à celle des particules des fines,
d) la récupération des fines,
e) le renvoi du refus du séparateur dans la première chambre du broyeur horizontal.

Dans cette deuxième alternative, le procédé comprend une étape c) de séparation de la composition C broyée en fines et en refus du séparateur.

Les inventeurs ont démontré que :

- la séparation est d'autant plus efficace que la quantité d'agent de mouture A ou B est élevée, jusqu'à atteindre une efficacité limite,
- l'efficacité de la séparation dépend de l'agent de mouture utilisé. La séparation est plus efficace pour l'agent de mouture A comprenant un aminoalcool que pour un agent de mouture comprenant un polyol.

Aussi, introduire l'agent de mouture A comprenant un aminoalcool dans la dernière chambre du broyeur permet une meilleure fluidification de la composition C broyée lors de la séparation et rend la séparation plus efficace.

En outre, l'introduction de la composition A comprenant au moins un agent de mouture A comprenant un aminoalcool dans la dernière chambre a également l'avantage de fluidifier la composition C broyée, et les fines récupérées, ce qui améliore leurs processabilités ultérieures car les fines sont plus fluides pour s'écouler, par exemple, dans un silo, ou lors de la charge ou la décharge d'un camion. En effet, généralement, le dosage requis en agent de mouture A comprenant un aminoalcool afin d'avoir une fluidité acceptable des fines récupérées est supérieur à celui requis pour un broyage efficace du liant hydraulique.

Dans cette deuxième alternative, les étapes i) et ii) définies ci-dessus, lorsqu'elles ont lieu, sont de préférence suivies d'une étape iii) de renvoi des particules rassemblées avec la composition C broyée vers le séparateur. Les étapes i), ii) et iii) sont mise en oeuvre entre les étapes b) et c).

Dans cette deuxième alternative, les fines sont récupérées lors de l'étape e). Il s'agit de la composition de liant hydraulique broyée à la taille/la surface spécifique désirée qui est obtenue par le procédé. Typiquement, lorsque le liant hydraulique est du ciment, la surface spécifique, mesurée par la méthode de Blaine, des fines est de l'ordre de 3200 à 4500 $cm^2/g$.

Le refus du séparateur comprend quant à lui des particules de taille trop grosse par rapport à celle désirée. Il est renvoyé dans la première chambre de broyage pour être broyé à nouveau. Aussi, la composition $\beta$ présente dans la première chambre comprend, voire consiste en, le liant hydraulique, le refus du séparateur et la composition B (sachant que le refus comprend du liant hydraulique, l'agent de mouture A et l'agent de mouture B).

Généralement, dans cette deuxième alternative, le procédé de broyage est mis en oeuvre en continu.

Selon un deuxième objet, l'invention concerne une unité de broyage destinée à la mise en oeuvre du procédé selon l'invention, comprenant :

- une source de liant hydraulique,
- une source de composition B comprenant au moins un agent de mouture B,
- une source de composition A comprenant au moins un agent de mouture A comprenant un aminoalcool,
- un broyeur horizontal comprenant plusieurs chambres, dont une première chambre munie d'au moins une entrée et une dernière chambre munie d'une sortie, chaque chambre étant séparée de la chambre adjacente par un diaphragme,

caractérisé en ce que la dernière chambre est munie d'une entrée reliée à la source de composition A.

Les modes de réalisation décrits ci-dessus, en particulier pour le broyeur, sont applicables.

Généralement, la dernière chambre s'étend du diaphragme séparant la dernière chambre de la chambre adjacente jusqu'à une grille de décharge, apte à laisser sortir la composition C broyée hors du broyeur. Typiquement, l'entrée la dernière chambre qui est reliée à la source de composition A est :

- soit au niveau du diaphragme séparant la dernière chambre de la chambre adjacente,
- soit dans l'enceinte de la dernière chambre, dans une zone généralement plus proche du diaphragme séparant la dernière chambre de la chambre adjacente que de la sortie de la dernière chambre,
- soit à la sortie de la dernière chambre, typiquement au niveau de la grille de décharge dont est munie la sortie de la dernière chambre.

Lorsque le broyeur est à boulets, la sortie de la dernière chambre est généralement munie d'une grille de décharge configurée pour empêcher les boulets de sortir de la dernière chambre.

Typiquement, le broyeur a uniquement deux chambres : la première chambre et la dernière chambre (qui est alors la deuxième chambre), celles-ci étant séparées par un diaphragme.

Le broyeur est typiquement configuré pour que de l'air puisse circuler depuis une entrée de la première chambre vers la sortie de la dernière chambre. L'unité comprend un filtre relié à la sortie de la dernière chambre et configuré pour filtrer l'air et récupérer les particules de liant hydraulique broyées les plus volatiles.

Selon une première alternative, l'unité de broyage est exempte de séparateur. Cette première alternative de l'unité de broyage permet de mettre en oeuvre la première alternative du procédé décrit ci-dessus.

Dans cette première alternative de l'unité, le filtre, lorsqu'il est présent, est configuré pour filtrer l'air, récupérer les particules de liant hydraulique broyées les plus volatiles et les renvoyer vers la composition C broyée.

Dans cette première alternative, la première chambre est :

- soit munie d'une seule entrée reliée à la source de liant hydraulique et à la source de composition B,
- soit munie de deux entrées, la première entrée étant reliée à la source de liant hydraulique et la deuxième entrée étant reliée à la source de composition B.

Selon une deuxième alternative, l'unité de broyage comprend un séparateur. Le séparateur est typiquement un séparateur dynamique à chambre rotative à air, à cyclone ou à filtre statique ou une combinaison. La sortie de la dernière chambre du broyeur est alors généralement reliée à l'entrée d'un séparateur apte à séparer des particules selon leur granulométrie et muni de deux sorties, une des sorties étant reliée à une entrée de la première chambre du broyeur horizontal. Cette deuxième alternative de l'unité de broyage permet de mettre en oeuvre la deuxième alternative du procédé décrit ci-dessus. L'unité de broyage comprend alors un circuit fermé, puisque la sortie de la dernière chambre du broyeur est reliée à l'entrée du séparateur dont une des sorties est reliée à la première chambre du broyeur.

Dans cette deuxième alternative, la première chambre est :

- soit munie d'une seule entrée reliée à la source de liant hydraulique, à la source de composition B et à une sortie du séparateur,
- soit munie de deux entrées, la première entrée étant reliée à la source de liant hydraulique et à la source de composition, la deuxième entrée étant reliée à une sortie du séparateur,
- soit munie de trois entrées, la première entrée étant reliée à la source de liant hydraulique, la deuxième entrée étant reliée à la source de composition B et la troisième entrée étant reliée à une sortie du séparateur.

Dans cette deuxième alternative de l'unité, le filtre, lorsqu'il est présent, est entre la dernière chambre du broyeur et le séparateur. Le filtre est configuré pour filtrer l'air, récupérer les particules de liant hydraulique broyées les plus volatiles et les renvoyer vers le séparateur.

L'invention est illustrée au vu des exemples qui suivent et des figures annexées.

**FIGURES**

**[Fig 1]** Figure 1 : Schéma d'une unité de broyage selon la deuxième alternative de l'invention.

**[Fig 2]** Figure 2 : Schéma d'une unité de broyage selon l'art antérieur et telle qu'utilisée dans l'exemple 1, avec indication des endroits 1, 2, 3, 4 5 et 6 de prélèvement des échantillons pour l'exemple 1.

**[Fig 3]** Figure 3 : Exemple de courbe de Tromp. Pourcentage du refus du séparateur renvoyé vers le broyeur en fonction de la taille des particules en $\mu$m.

**[Fig 4]** Figure 4 : Efficacité C du séparateur en fonction de la quantité d'agent de mouture en entrée de séparateur pour chaque agent de mouture et chaque dosage d'agent de mouture mesuré par $m^2$ de ciment. Les valeurs indiquées sur les graphiques correspondent aux dosages initiaux en ppm secs d'agent de mouture par rapport au poids de ciment. Les croix correspondent à l'agent de mouture A comprenant un aminoalcool, et les ronds à l'agent de mouture B comprenant un alkylène glycol.

**[Fig 5]** Figure 5 : Pente $\beta$ du fish-hook du séparateur en fonction de la quantité d'agent de mouture en entrée de séparateur pour chaque agent de mouture et chaque dosage d'agent de mouture mesuré par $m^2$ de ciment. Les croix correspondent à l'agent de mouture A comprenant un aminoalcool, et les ronds à l'agent de mouture B comprenant un alkylène glycol. Les valeurs indiquées sur les graphiques correspondent aux dosages initiaux en ppm secs d'agent de mouture par rapport au poids de ciment.

**[Fig 6]** Figure 6 : Dosage d'agent de mouture (en g sec) mesuré par $m^2$ de ciment au sein des chambres du broyeur et aux différents endroits de l'unité où les échantillons ont été prélevés. Les croix correspondent à l'agent de mouture A comprenant un aminoalcool, et les ronds à l'agent de mouture B comprenant un alkylène glycol.

**[Fig 7]** Figure 7 : Relation entre la quantité d'agent de mouture (en g sec) mesuré par tonne de ciment mesurée sur les échantillons et la surface spécifique du ciment en cm2/g. Les croix correspondent à l'agent de mouture A comprenant un aminoalcool, et les ronds à l'agent de mouture B comprenant un alkylène glycol.

**[Fig 8]** Figure 8 : Schéma d'une unité de broyage selon la deuxième alternative et endroits de prélèvement des échantillons de l'exemple 2.

**[Fig 1]** La figure 1 illustre une unité de broyage selon la deuxième alternative de l'invention, dans le cas où l'unité de broyage comprend un filtre. Un broyeur horizontal 11 comprenant deux chambres :

- une première chambre 12 munie d'une entrée 13 et
- une deuxième chambre (dernière chambre) 14 munie d'une entrée 15 et d'une sortie 16,

la première chambre 12 étant séparée de la deuxième chambre 14 par un diaphragme 17.

L'entrée 13 de la première chambre 12 est reliée à une source 18 de liant hydraulique, à une source 19 de composition B, et à une sortie 24 du séparateur 23. L'entrée 15 de la deuxième chambre 14 est reliée à la source 20 de composition A. Le broyeur 1 est configuré pour que de l'air puisse circuler depuis l'entrée 13 de la première chambre vers la sortie 16 de la deuxième chambre 14. La sortie 16 de la deuxième chambre 14 est reliée :

- à un filtre 21 configuré pour filtrer l'air et renvoyer les particules filtrées vers l'entrée 22 d'un séparateur 23, et
- à l'entrée 22 du séparateur 23 apte à séparer des particules selon leur granulométrie et muni de deux sorties : une sortie 24, qui est reliée à l'entrée 13 de la première chambre 12 et une sortie 25.

Les points 1, 2, 3, 4, 5 et 6 ne correspondent pas à des éléments de l'unité, mais indiquent les différents endroits où les échantillons ont été prélevés, en référence aux exemples qui suivent.

## EXEMPLES

Dans les exemples qui suivent, les agents de mouture A et B ont été introduits selon des méthodes variables, soit en première chambre 12 par l'entrée 13, soit au niveau de la grille de décharge dont est munie la sortie 16 de la deuxième chambre, soit à ces deux endroits. soit au niveau de la grille de décharge dont est munie la sortie 16 de la deuxième chambre, soit à ces deux endroits. Les expériences réalisées mettent en évidence la répartition de l'agent de mouture A comprenant un aminoalcool ou de l'agent de mouture B comprenant un alkylène glycol, et leur impact sur la granulométrie et l'écoulement du ciment, ainsi que les débits de matière dans le procédé et démontrent l'intérêt d'introduire l'agent de mouture A dans la deuxième chambre 14 du broyeur horizontal 11.

## EXEMPLE 1

### Matériaux

Le ciment étudié était de type CEM I 42.5R (94% de clinker ; 5,5% gypse ; 5,5% calcaire).

Les agents de mouture ont été formulés spécifiquement pour l'étude. Leurs compositions sont fournies dans le tableau 1 ci-dessous :

*Tableau 1 : Composition des agents de mouture A et B utilisés dans l'exemple 1.*

**[Table 1]**

| | Composés | Matière active (%) |
|---|---|---|
| agent de mouture A comprenant un aminoalcool | Eau | |
| | Triéthanolamine | 8,33 |
| | Triisopropanolamine diluée | 33,33 |
| agent de mouture B comprenant un alkylène glycol | Eau | |
| | Diéthylène glycol | 22,70 |
| | Glycérol dilué | 12,09 |

L'unité de broyage utilisée est telle qu'illustrée à la figure 2.

Le broyeur horizontal 11 utilisé comprenait deux chambres séparées par un diaphragme 17.

Pour un ciment sans agent de mouture, ainsi que sur les ciments contenant chacun des agents de mouture à différentes concentrations, des échantillons ont été prélevés aux différents points du circuit présentés sur la Figure 2, une fois l'état d'équilibre atteint sur la ligne de broyage.

De plus, pour les ciments contenant les agents de mouture, des prélèvements ont été effectués tous les 1,2 m dans la première chambre 12 du broyeur horizontal 11 et tous les mètres dans la seconde chambre.

Dans ce premier exemple, l'agent de mouture est injecté sous forme liquide par goutte à goutte sur la trémie d'alimentation de liant hydraulique. Le mélange de liant hydraulique et d'agent de mouture a été introduit à l'entrée 13 du broyeur horizontal 11.

Le tableau 2 ci-dessous récapitule les différents prélèvements analysés.

*Tableau 2 Prélèvements effectués le long de la ligne de broyage - dosages initiaux*

**[Table 2]**

| Essai | Agent de mouture | Dosage initial (ppm) | Dosage sec* (ppm) | Référence donnée pour le dosage | Prélèvements dans le broyeur | Prélèvements le long du circuit (Points 2, 3, 4, 5, 6) |
|---|---|---|---|---|---|---|
| T3 (ref) | aucun | 0 | 0 | | X | X |
| T4 | agent de mouture A comprenant un aminoalcool | 250 | 104 | D1 | | X |
| T5 | | 350 | 146 | D2 | | X |
| T6 | | 450 | 187 | D3 | X | X |
| T7 | agent de mouture B comprenant un alkylène glycol | 300 | 104 | D1 | | X |
| T8 | | 400 | 139 | D2 | | X |
| T9 | | 500 | 174 | D3 | X | X |
| * Dosage en matière active, sans prise en compte de l'eau | | | | | | |

L'essai T3, sans agent de mouture, est la référence de l'étude. Les différents dosages initiaux seront nommés D1, D2 et D3 ci-après.

**Méthodes**

**Malaxage** :

Un malaxeur Kenwood KVC5305S chef Elite a été utilisé pour mélanger le ciment et l'eau ultra pure au ratio eau/ciment (« E/C » ci-après) souhaité. 400 g de ciment ont été introduits dans l'eau ultra pure préparée dans le bol du malaxeur selon la séquence indiquée au tableau 3 :

*Tableau 3 Protocole de malaxage*

**[Table 3]**

| Temps | Vitesse (tours par min) | Activité |
|---|---|---|
| 0'-30" | 43 | Versement de la poudre |
| 30"-1' | 96 | Malaxage |
| 1'-1'30 | 0 | Raclage des bords |

(suite)

| Temps | Vitesse (tours par min) | Activité |
|---|---|---|
| 1’30-2’30 | 96 | Malaxage |

Lorsqu’il y avait beaucoup de particules grossières dans le ciment, le malaxage a été réalisé à la main. Le ciment a été introduit dans l’eau ultra pure pendant 30 s puis la pâte a été mélangée avec une spatule pendant 2 min.

***Dosage des agents de mouture :***

Le dosage des agents de mouture a été obtenu par lavage du ciment et mesure de la concentration en carbone dans le jus de ciment.

Le ciment a été mixé avec de l’eau ultra pure suivant le protocole de mélange décrit ci-dessus, puis laissé 30 min au repos. Après homogénéisation manuelle, le coulis a été filtré au Büchner, et le filtrat a été récupéré dans un tube à hémolyse après filtration à 0,2 $\mu$m, et acidifié pour s’affranchir de toute carbonatation. Ces solutions ont ensuite été passées à l’analyseur de Carbone Organique Total (« COT » ci-après) pour y déterminer les concentrations en carbone.

La quantité de carbone présente dans le ciment sans agent de mouture a été déduite des mesures effectuées sur les ciments contenant l’agent de mouture.

Afin de vérifier que l’agent de mouture ne présente pas d’isotherme d’adsorption sur la phase solide dans l’eau, les mesures ont été réalisées à deux rapports eau/ciment E/C : 0,4 et 0,6, pour des échantillons de particules fines prélevés à la sortie 25 du séparateur E/C (essais T3, T6, T9, point (6) du circuit de broyage). En l’absence d’isotherme d’adsorption, le ratio carbone en solution/ciment ne dépend pas du rapport E/C initial, et la totalité de l’agent de mouture est dosé.

La mesure de Carbone Organique Total (COT) a été effectuée sur les filtrats acidifiés avec l’analyseur SHIMADZU TOC-VCPN. Le COT a été calculé par différence entre la quantité en carbone total (obtenue par carbonisation de la solution et mesure de la quantité de $CO_2$ dégagée à l’infra-rouge) et la quantité de carbone inorganique (obtenue par acidification de la solution à pH < 1 et dégagement du $CO_2$ dissout par bullage à l’air synthétique). Une courbe de calibration effectuée sur chacun des agents de mouture a permis de déterminer leur concentration dans les jus de ciment. Elle est exprimée en g/L.

**Résultats**

Les quantités d’agent de mouture sont exprimées en ppm (g sec d’agent de mouture par tonne de ciment) ou en g/$m^2$ (g sec d’agent de mouture par mètre carré de surface de ciment).

**Etalonnage du COT**

Les courbes d’étalonnage obtenues pour l’agent de mouture A comprenant un aminoalcool et pour l’agent de mouture B comprenant un alkylène glycol présentaient un coefficient de corrélation de 1, et ont donc pu être utilisées pour calculer la quantité en agent de mouture à partir de la quantité de COT mesurée dans les échantillons.

La concentration en agent de mouture A ($C_A$) comprenant un aminoalcool a ainsi calculée à partir de la valeur de COT selon :

$$C_A = 0{,}0019 * COT + 0{,}0115$$

La concentration en agent de mouture B ($C_B$) comprenant un alkylène glycol a ainsi calculée à partir de la valeur de COT selon :

$$C_B = 0{,}0026 * COT + 0{,}0111$$

**Vérification du lavage du ciment**

Afin de s’assurer de l’absence d’isotherme d’adsorption des agents de mouture sur le ciment, des mesures de COT ont été réalisées à deux rapports E/C : 0,4 et 0,6, pour les essais T6 et T9, aux points (6) et les résultats étaient les suivants :

*Tableau 4 Efficacité du lavage du ciment - Valeur de COT en fonction du rapport E/C*

**[Table 4]**

| Essai | Valeur de COT à E/C 0,4 (ppm) | Valeur de COT à E/C 0,6 (ppm) |
|---|---|---|
| T6 (6) | 149 | 146 |
| T9 (6) | 132 | 137 |

Les résultats montrent que les valeurs de COT ne sont pas sensiblement dépendantes du rapport E/C. Les agents de mouture ne s'adsorbent pas à la surface des particules de ciment, et le lavage est donc efficace pour rendre compte de la quantité d'agent de mouture dans les différents échantillons.

Pour les expériences décrites ci-après, les ciments ont été analysés au rapport E/C de 0,4 pour avoir une plus forte concentration de carbone en solution.

**COT sur les échantillons ne contenant pas d'agent de mouture - Essai T3**

Le COT a été mesuré aux points (2), (3), (4), (5) et (6) de la ligne de broyage et à l'intérieur du broyeur horizontal 11, sur les échantillons broyés sans agent de mouture (référence). Les valeurs de COT rapportées au poids de ciment sont indiquées aux tableaux 5 à 7 :

Tableau 5 Valeurs de COT sur les différents prélèvements à l'extérieur du broyeur

**[Table 5]**

| Point de la ligne de broyage | COT (ppm de ciment) |
|---|---|
| (2) Surplus du broyeur | 2,8 |
| (3) Filtre | 4,6 |
| (4) Alimentation du séparateur | 3 |
| (5) Refus du séparateur renvoyé vers le broyeur | 2,4 |
| (6) Fines issues du séparateur | 3,5 |

Tableau 6 COT dans le broyeur, 1$^{ère}$ chambre

**[Table 6]**

| Distance à l'entrée (m) | COT (ppm de ciment) |
|---|---|
| 0 | 1,3 |
| 1,2 | 4,2 |
| 2,4 | 2,1 |
| 3,6 | 1,9 |

Tableau 7 COT dans le broyeur, 2$^{nde}$ chambre

**[Table 7]**

| Distance au diaphragme 17 (m) | COT (ppm de ciment) |
|---|---|
| 0 | 2,2 |
| 1 | 3,1 |
| 2 | 2,5 |
| 3 | 2,8 |

(suite)

| Distance au diaphragme 17 (m) | COT (ppm de ciment) |
|---|---|
| 4 | 5,0 |
| 5 | 2,5 |
| 5,9 | 3,1 |

Le ciment des échantillons des tests effectués sans agent de mouture contient moins de 5 ppm de COT le long de la ligne de broyage.

Dans les échantillons correspondants contenant de l'agent de mouture des expériences décrites ci-après, cette quantité a été retranchée afin de ne rendre compte de que l'agent de mouture.

## COT sur les échantillons broyés avec les agents de mouture

Les résultats sont exprimés en dosage sec d'agent de mouture par tonne de ciment ou ppm.

### *Influence du dosage initial*

Chaque agent de mouture a été introduit à trois dosages initiaux D1, D2 ou D3 (Tableau 2). Les quantités d'agent de mouture mesurées dans les différents prélèvements de ciment sont présentées au tableau 8 ci-dessous.

Tableau 8 : Matière active par poids de ciment pour chacun des prélèvements

**[Table 8]**

| | | Dosage initial en agent de mouture A comprenant un aminoalcool | | | Dosage initial en agent de mouture B comprenant un alkylène glycol | | |
|---|---|---|---|---|---|---|---|
| | | D1 | D2 | D3 | D1 | D2 | D3 |
| Matière active par poids de ciment (g/t, BWOC) | (2) Surplus du broyeur | 65 | 80 | 97 | 61 | 64 | 84 |
| | (3) Filtre | 134 | 108 | 150 | 97 | 92 | 120 |
| | (4) Alimentation du séparateur | 72 | 86 | 107 | 52 | 63 | 85 |
| | (5) Refus du séparateur renvoyé vers le broyeur | 33 | 35 | 44 | 32 | 37 | 40 |
| | (6) Fines issues du séparateur | 92 | 108 | 142 | 93 | 99 | 123 |

On a ainsi observé que :

- La quantité d'agent de mouture dans le ciment aux différents points de la ligne de broyage augmente avec le dosage initial, à l'exception du filtre 21 dans lequel le dosage mesuré pour le dosage D1 est supérieur à celui mesuré pour le dosage D2, quel que soit l'agent de mouture.
- Dans le filtre 21, pour l'agent de mouture A comprenant un aminoalcool, au dosage D1, la quantité d'agent de mouture mesurée dans le ciment est supérieure au dosage initial. Les inventeurs supposent que cet excès pourrait être dû à la quantité d'agent de mouture qui se trouve à la surface des particules du refus du séparateur réinjectées sur la ligne de broyage ou à l'adsorption de l'agent de mouture en suspension dans le circuit.
- Le dosage en agent de mouture sur les grosses particules (celles du refus du séparateur renvoyé vers le broyeur horizontal 11) est plus faible que celui sur les particules de petite taille (Fines issues du séparateur). Plus précisément, les inventeurs ont observé que pour les deux agents de mouture, la quantité de matière active des agents de mouture mesurée dans les différents échantillons est corrélée à la surface spécifique des particules de ciment, selon l'équation suivante :

- quantité de matière active (en g/t) =
- 0,0329 * (surface spécifique du ciment (en $cm^2/g$)) – 1,637

avec un coefficient de corrélation $R^2$ de 0,9528.

Les quantités d'agent de mouture mesurées ont donc été ramenées à la surface spécifique des particules, et représentées au tableau 9 ci-dessous.

Tableau 9 : Matière active par $m^2$ de ciment pour chacun des prélèvements

**[Table 9]**

| | | Dosage initial en agent de mouture A comprenant un aminoalcool | | | Dosage initial en agent de mouture B comprenant un alkylène glycol | | |
|---|---|---|---|---|---|---|---|
| | | D1 | D2 | D3 | D1 | D2 | D3 |
| Matière active (g) par $m^2$ de ciment | (2) Surplus du broyeur | 2,0 | 2,5 | 3,2 | 2,1 | 2,5 | 3,0 |
| | (3) Filtre | 2,5 | 2,4 | 3,1 | 2,4 | 2,3 | 2,9 |
| | (4) Alimentation du séparateur | 2,1 | 2,5 | 3,3 | 1,7 | 2,0 | 2,9 |
| | (5) Refus du séparateur renvoyé vers le broyeur | 1,9 | 2,3 | 3,0 | 1,8 | 2,2 | 2,7 |
| | (6) Fines issues du séparateur | 2,3 | 2,7 | 3,6 | 2,4 | 2,6 | 3,3 |

Exprimé en g par $m^2$ de ciment, l'écart entre les quantités d'agent de mouture aux différents points du circuit est amoindri, pour un même dosage initial : la surface spécifique des particules de ciment, et donc leurs granulométries, régit les interactions entre les agents de mouture et le ciment.

***Efficacité du séparateur - fish-hook ($\beta$) et complément du bypass (C)***

La courbe de Tromp décrit l'efficacité d'un séparateur. Elle est calculée pour chaque classe granulaire comme le rapport entre le débit du refus du séparateur (renvoyé vers le broyeur horizontal 11) et le débit de l'alimentation du séparateur. Dans le cas d'une efficacité parfaite du séparateur, le pourcentage de refus serait nul jusqu'à ce que la taille de particules maximale acceptable soit atteinte, puis égal à 100 %. Dans les cas réels, la courbe de Tromp du séparateur présente l'allure de la figure 3.

- Le bypass met en évidence qu'il existe, pour toutes les classes granulaires, une fraction de particules toujours réinjectées dans le broyeur horizontal 11. L'efficacité du séparateur est décrite par :

$$C = 1\text{-bypass}$$

le séparateur est d'autant plus efficace que C est élevé.
- Le « Fish Hook » est la partie de la courbe pour laquelle la taille des particules est inférieure à celle correspondant au bypass, et rend compte de la fuite de fines vers le broyeur horizontal 11. Plus sa pente ($\beta$) est faible, moins la quantité de fines qui retourne au broyeur horizontal 11 est importante, et meilleure est l'efficacité du séparateur.

Les résultats illustrés à la figure 4 et à la figure 5 montrent que l'efficacité du séparateur dépend de l'agent de mouture utilisé :

- C est toujours plus élevé et $\beta$ plus faible avec l'agent de mouture A comprenant un aminoalcool,
- $\beta$ présente une variation non monotone avec le dosage initial en agent de mouture B comprenant un alkylène glycol et diminue de manière monotone lorsque le dosage initial en l'agent de mouture A comprenant un aminoalcool augmente.

- une efficacité limite du séparateur est atteinte dès le dosage intermédiaire en agent de mouture A comprenant un aminoalcool (C ne varie plus, β se stabilise)

*A l'intérieur du broyeur - Essais T6 et T9*

Les prélèvements ont été effectués tous les 1,2 m dans la première chambre 12 et tous les mètres dans la deuxième. Les dosages en agents de mouture par $m^2$ de ciment sont reportés sur la figure 6.
Pour l'agent de mouture B comprenant un alkylène glycol, la quantité diminue légèrement dans la première chambre 12 pour chuter et se stabiliser dans la deuxième chambre 14. Pour l'agent de mouture A comprenant un aminoalcool, cette quantité augmente dans la première chambre 12 et se stabilise également dans la deuxième chambre 14.
Dans la première chambre 12 du broyeur horizontal 11, la quantité d'agent de mouture par poids de ciment n'évolue pas linéairement avec la surface spécifique du ciment. Cette relation devient vraie à partir de la seconde chambre, comme le montre la Figure 7.
A l'intérieur du broyeur horizontal 11 les deux agents de mouture se différencient dans la première chambre 12, l'agent de mouture B comprenant un alkylène glycol étant plus abondant par unité de surface que l'agent de mouture A comprenant un aminoalcool. La quantité d'agent de mouture par unité de surface de ciment se stabilise dans la seconde chambre du broyeur horizontal 11, et la différence entre les deux agents de mouture s'amenuise.

**EXEMPLE 2**

**Matériaux**

Le ciment étudié était de type CEM I 42.5R (94% de clinker ; 5,5% gypse ; 5,5% calcaire).
Les agents de mouture ont été formulés spécifiquement pour l'exemple 2. Leurs compositions sont fournies dans le tableau 10 ci-dessous. L'agent de mouture B1 est de nature identique à l'agent de mouture A. L'agent de mouture B2 est différent.
*Tableau 10 : Composition des agents de mouture A, B1 et B2 utilisés dans l'exemple 2.*

**[Table 10]**

| | Composés | Matière active (%) |
|---|---|---|
| agent de mouture A comprenant un aminoalcool | Eau | |
| | Triéthanolamine | 8,33 |
| | Triisopropanolamine diluée | 33,33 |
| agent de mouture B1 comprenant un aminoalcool | Eau | |
| | Triéthanolamine | 8,33 |
| | Triisopropanolamine diluée | 33,33 |
| agent de mouture B2 | Eau | |
| | Diéthylène glycol | 22,70 |
| comprenant un alkylène glycol | Glycérol dilué | 12,09 |

L'unité de broyage utilisée est telle qu'illustrée à la Figure 8. La figure 8 est identique à la figure 1, excepté que :

- les points de prélèvement 2 à 6 figurent sur la figure 8,
- l'entrée 15 de la deuxième chambre 14, qui est reliée à la source 20 de composition A, est au niveau de la grille de décharge dont est munie la sortie 16 de la deuxième chambre. L'entrée 15 et la sortie 16 sont donc au même endroit.

Le broyeur horizontal 11 utilisé comprenait deux chambres séparées par un diaphragme 17.
Dans ce second exemple, il, est démontré l'intérêt d'injecter des agents de mouture dans chacune des deux chambres.
Différents cas ont été testés :

- soit aucun agent de mouture n'a été injecté (référence - essai T1),

- soit l'agent de mouture B1 a été injecté par l'entrée 13 de la première chambre et aucun agent de mouture n'a été injecté dans la deuxième chambre (comparatif - essais T2, T3 et T4),
- soit aucun agent de mouture n'a été injecté dans la première chambre et l'agent de mouture A a été injecté par au niveau de la grille de décharge dont est munie la sortie 16 de la deuxième chambre (comparatif - essais T5 et T6),
- soit l'agent de mouture B2 a été injecté par l'entrée 13 de la première chambre et aucun agent de mouture n'a été injecté dans la deuxième chambre (comparatif - essai T8),
- soit un agent de mouture B a été injecté par l'entrée 13 de la première chambre et et l'agent de mouture A a été injecté par au niveau de la grille de décharge dont est munie la sortie 16 de la deuxième chambre, via un tube d'injection dans l'axe de la grille de décharge (invention - essais T7, T9 et T10), avec deux cas distincts :

    - soit l'agent de mouture B est B1 (identique à l'agent de mouture A) et les agents de mouture injectés en première et deuxième chambres sont donc de natures identiques (essai T7),
    - soit l'agent de mouture B est B2 (différent de l'agent de mouture A) et les agents de mouture injectés en première et deuxième chambres sont donc de natures différentes (essais T9 et T10).

Des échantillons ont été prélevés aux différents points 2, 3, 4, 5 et 6 du circuit présenté sur la Figure 8, une fois l'état d'équilibre atteint sur la ligne de broyage.

Le Tableau 11 résume l'ensemble des essais réalisés, les dosages initiaux et les points d'injection.

**[Table 11]**

| Essai | Première chambre | | Deuxième chambre | Prélèvements dans le broyeur | Prélèvements aux points 2, 3, 4, 5, 6 |
|---|---|---|---|---|---|
| | Dosage de l'agent B1 (ppm) | Dosage de l'agent B2 (ppm) | Dosage de l'agent A (ppm) | | |
| T1 (ref) | 0 | 0 | 0 | X | X |
| T2 (comp) | 250 | 0 | 0 | | X |
| T3 (comp) | 350 | 0 | 0 | | X |
| T4 (comp) | 450 | 0 | 0 | X | X |
| T5 (comp) | 0 | 0 | 262 | | X |
| T6 (comp) | 0 | 0 | 350 | | X |
| T7 (inv) | 250 | 0 | 138 | | X |
| T8 (comp) | 0 | 300 | 0 | | X |
| T9 (inv) | 0 | 300 | 113 | | X |
| T10 (inv) | 0 | 300 | 199 | X | X |

On a relevé les différents débits aux points de prélèvement du circuit et calculé le taux de charge circulante comme le rapport entre le débit de matière fraîche entrant dans le circuit (ici 48 tonnes/h dans tous les essais) et le débit de matière revenant du séparateur depuis la sortie 24. Ce taux mesure la manière dont le procédé est saturé en matière, c'est-à-dire son encombrement relatif, et influence directement son efficacité. On cherche à diminuer ce taux pour se permettre d'augmenter le débit du procédé.

Les analyses granulométriques des prélèvements ont également permis une mesure de la finesse du ciment obtenu en sortie via les refus sur tamis de 45 $\mu$m. Plus le refus est faible, plus le ciment est fin.

Les valeurs de bypass du séparateur ont également été relevées lors des essais. Plus le paramètre C est élevé, meilleure est la qualité de filtration au séparateur.

Le débit au filtre 21 a également été mesuré. Le filtre 21 peut facilement saturer car il se charge de particules fines. On préfère donc un débit au filtre 21 faible.

L'ensemble des mesures est rassemblé dans le tableau 12

**[Table 12]**

| Essai | Taux de charge circulante | C = 1-Bypass | Refus à 45 μm | Débit au filtre 21 (tonnes/h) |
|---|---|---|---|---|
| T1 (ref) | 44,56% | 94% | 5,0 | 19,73 |
| T2 (comp) | 86,67% | 90% | 4,2 | 8,28 |
| T3 (comp) | 136,96% | 83% | 2,8 | 13,53 |
| T4 (comp) | 244,75% | 73% | 1,0 | 7,25 |
| T5 (comp) | 97,02% | 89% | 3,2 | 13,38 |
| T6 (comp) | 114,58% | 87% | 2,0 | 13,74 |
| T7 (inv) | 98,83% | 89% | 2,0 | 3,53 |
| T8 (comp) | 68,04% | 91% | 3,4 | 16,86 |
| T9 (inv) | 77,96% | 90% | 4,0 | 8,61 |
| T10 (inv) | 71,79% | 91% | 2,8 | 11,00 |

L'injection de l'agent de mouture B1 en première chambre sans rien injecter en seconde chambre (essais T2 à T4) permet d'obtenir un ciment fin (refus plus faible que pour l'essai T1 de référence) mais conduit à une forte augmentation du taux de charge circulante, et une forte dégradation de la qualité de filtration au séparateur comme le montre le paramètre C.

L'injection de l'agent de mouture A en seconde chambre,

- soit sans rien injecter en première chambre (essais T5 et T6),
- soit en injectant l'agent de mouture B1 en première chambre (essai T7), permettent de soulager le procédé, avec des taux de charge circulante plus faibles et de meilleurs facteurs de séparation C que ceux obtenus avec les essais T2 à T4.

L'injection de l'agent de mouture B2 en première chambre (essai T8) permet un taux faible de charge circulante et une bonne qualité de filtration au séparateur. Néanmoins, le débit au filtre 21 est le plus élevé. L'essai T8 charge plus ce filtre que les essais T9 et T10, ce qui fait de ces derniers un meilleur compromis.

La combinaison la plus efficace est l'injection de l'agent de mouture B2 en première chambre et de l'agent de mouture A en seconde chambre (essais T9 à T10), pour laquelle les plus faibles taux de charge circulante, les facteurs de séparation C les plus élevés, et des ciments de finesse acceptable sont obtenus. Les taux de charge circulante et les débits au filtre de sortie broyeur relevés sur les essais T9 et T10 permettent d'augmenter le débit d'entrée, donc la productivité générale du procédé, sans risquer de le saturer le procédé.

**Conclusion**

Ces résultats démontrent que :

- la quantité d'agent de mouture retrouvée sur les particules de ciment est essentiellement gouvernée par la surface spécifique des particules de ciment dès la sortie de la première chambre 12 du broyeur horizontal 11,
- Plus le dosage initial en agent de mouture augmente, plus la quantité d'agent de mouture augmente le long de la ligne de broyage. Il y a cependant pour l'agent de mouture A comprenant un aminoalcool au dosage intermédiaire D2, une quantité d'agent de mouture plus importante que ce qui est introduit à l'initial. Cette différence serait en fait due au fait que le filtre 21 sélectionne les particules de plus petite taille, pour lesquelles la concentration en agent de mouture est la plus élevée à cause de l'effet de surface développée.
- La perte d'agent de mouture le long de la ligne de broyage croît avec le dosage initial, ce qui pourrait être expliqué par un résultat d'équilibres dynamiques d'adsorption solide-gaz dans le broyeur horizontal 11. Pour limiter cette perte il faudrait travailler à plus bas dosage mais l'agent de mouture ne permettrait pas d'optimiser les paramètres du broyeur horizontal 11 pour atteindre la finesse souhaitée.
- A l'intérieur du broyeur horizontal 11, les deux agents de mouture se différencient par leurs concentrations dans la première chambre 12, l'agent de mouture B comprenant un alkylène glycol étant le plus concentré.

- Au séparateur, l'agent de mouture A comprenant un aminoalcool a un effet plus favorable sur la pente du fish hook ($\beta$) et sur le complément du bypass (C) que l'agent de mouture B comprenant un alkylène glycol. Le dosage intermédiaire D2 en agent de mouture A comprenant un aminoalcool permet déjà d'atteindre un plateau d'efficacité du séparateur, à l'inverse de l'agent de mouture B comprenant un alkylène glycol.
- L'injection de l'agent de mouture A en seconde chambre et de l'agent de mouture B2 en première chambre ont permis d'obtenir le meilleur compromis entre l'efficacité du séparateur, le taux de charge circulante, la finesse de ciment et le débit au filtre en comparaison avec :
    - l'injection de l'agent de mouture B1 en première chambre, sans ajouter d'agent de mouture dans la seconde chambre,
    - l'injection de l'agent de mouture B1 en première chambre et de l'agent de mouture B2 en seconde chambre.

Ces résultats montrent l'intérêt d'introduire les deux agents de mouture à des endroits différents de la ligne de broyage : l'agent de mouture B à l'entrée 13 du broyeur horizontal 11 pour permettre un temps de séjour suffisamment important du ciment dans le broyeur horizontal 11 sans éliminer les fines trop rapidement, et l'agent de mouture A comprenant un aminoalcool dans la deuxième chambre 14 du broyeur horizontal 11 pour une meilleure fluidification de la poudre dans la ligne du séparateur.

**Revendications**

**1.** Procédé de broyage de liant hydraulique comprenant :

a) l'introduction :

- d'un liant hydraulique, et
- d'une composition B comprenant au moins un agent de mouture B,

dans la première chambre (12) d'un broyeur horizontal (11) comprenant plusieurs chambres (12, 14), dont une première chambre (12) et une dernière chambre (14), chaque chambre (12) étant séparée de la chambre adjacente (14) par un diaphragme (17),
ce par quoi une composition $\beta$ comprenant le liant hydraulique et la composition B est obtenue dans la première chambre (12),

b) le broyage de la composition $\beta$ dans le broyeur horizontal (11), ce par quoi la

composition $\beta$ passe de la première chambre (12) à la dernière chambre (14) et
une composition C broyée est obtenue en sortie de la dernière chambre (14), **caractérisé en ce qu'**il comprend, lors de l'étape de broyage, l'introduction, dans la dernière chambre (14), d'une composition A comprenant au moins un agent de mouture A comprenant un aminoalcool, la composition A étant différente de la composition $\beta$.

**2.** Procédé de broyage de liant hydraulique selon la revendication 1, comprenant, après l'étape b) :

c) la séparation, par un séparateur (23), de la composition C broyée en fines et en refus du séparateur, où la taille moyenne des particules du refus du séparateur est supérieure à celle des particules des fines,
d) la récupération des fines,
e) le renvoi du refus du séparateur dans la première chambre (12) du broyeur horizontal (11).

**3.** Procédé de broyage de liant hydraulique selon la revendication 1 ou 2, dans lequel le broyeur horizontal (11) a uniquement deux chambres (12,14).

**4.** Procédé de broyage de liant hydraulique selon l'une quelconque des revendications 1 à 3, dans lequel le liant hydraulique est du ciment comprenant éventuellement des additions minérales.

**5.** Procédé de broyage de liant hydraulique selon l'une quelconque des revendications 1 à 4, dans lequel l'agent de mouture B comprend un polyol, de préférence choisi parmi :

- un diol tel qu'un alkylèneglycol comprenant de préférence de 1 à 20 atomes de carbone, notamment de 1 à 10 atomes de carbone, et dont le groupe alkylène peut être porteur d'un méthyle, et étant typiquement choisi parmi le 2-méthyl-1,3-propanediol, le monoéthylèneglycol, le diéthylèneglycol, le triéthylèneglycol, le tétraethyleneglycol, le propylène glycol et un mélange de ceux-ci,
- un triol, de préférence le glycérol, et
- un tétraol, de préférence l'érythritol,

ou un mélange de ceux-ci,
de préférence l'agent de mouture B comprend un alkylène glycol comprenant de préférence de 1 à 20 atomes de carbone ou un mélange de ceux-ci, et éventuellement du glycérol.

**6.** Procédé de broyage de liant hydraulique selon l'une quelconque des revendications 1 à 5, dans lequel l'agent de mouture B comprend :

- un aminoalcool ou un de ses sels, ledit aminoalcool comprenant notamment :
  - de 2 à 8 atomes de carbones, notamment de 4 à 6 atomes de carbone, et/ou
  - 1, 2 ou 3 fonctions alcool,

  l'aminoalcool étant de préférence la N-méthyldiéthanolamine (MDEA), la diisopropanolamine (DIPA), la triisopropanolamine (TIPA), la triéthanolamine (TEA), l'ethanoldiisopropanol amine (EDIPA), la diéthanolisopropanolamine (DEIPA) ou un mélange de celles-ci, et
- éventuellement un acide carboxylique ou un sel de celui-ci, par exemple choisi parmi l'acide acétique ou un de ses sels, l'acide formique ou un de ses sels, ou un mélange de ceux-ci.

**7.** Procédé de broyage de liant hydraulique selon l'une quelconque des revendications 1 à 6, dans lequel l'aminoalcool de l'agent de mouture A comprend :

- de 2 à 8 atomes de carbones, notamment de 4 à 6 atomes de carbone, et/ou
- 1, 2 ou 3 fonctions alcool,

l'aminoalcool étant de préférence la N-méthyldiéthanolamine (MDEA), la diisopropanolamine (DIPA), la triisopropanolamine (TIPA), la triéthanolamine (TEA), l'ethanoldiisopropanol amine (EDIPA), la diéthanolisopropanolamine (DEIPA) ou un mélange de celles-ci.

**8.** Procédé de broyage de liant hydraulique selon l'une quelconque des revendications 1 à 7, dans lequel la composition A est introduite dans la dernière chambre :

soit au niveau du diaphragme séparant la dernière chambre de la chambre adjacente,
soit dans l'enceinte de la dernière chambre, dans une zone de préférence plus proche du diaphragme séparant la dernière chambre de la chambre adjacente que de la sortie de la dernière chambre,
soit à la sortie de la dernière chambre, de préférence au niveau de la grille de décharge dont est munie la sortie de la dernière chambre.

**9.** Unité de broyage destinée à la mise en oeuvre du procédé selon l'une quelconque des revendications 1 à 8, comprenant :

- une source (18) de liant hydraulique,
- une source (19) de composition B comprenant au moins un agent de mouture B,
- une source (20) de composition A comprenant au moins un agent de mouture A comprenant un aminoalcool,
- un broyeur horizontal (11) comprenant plusieurs chambres (12,14), dont une première chambre (12) munie d'au moins une entrée (13) et une dernière chambre (14) munie d'une sortie (16), chaque chambre (12) étant séparée de la chambre adjacente (14) par un diaphragme (17),

**caractérisé en ce que** la dernière chambre (14) est munie d'une entrée (15) reliée à la source (20) de composition A.

**10.** Unité de broyage selon la revendication 9, dans laquelle la sortie (16) de la dernière chambre (14) est reliée à l'entrée (22) d'un séparateur (23) apte à séparer des particules selon leur granulométrie et muni de deux sorties (24,25), une des sorties (24) étant reliée à une entrée (13) de la première chambre (12) du broyeur horizontal (11).

**Patentansprüche**

1. Zerkleinerungsverfahren von hydraulischem Bindemittel, umfassend:

    a) Einbringen:

        - eines hydraulischen Bindemittels und
        - einer Zusammensetzung B, umfassend mindestens ein Mahlmittel B,

        in die erste Kammer (12) einer horizontalen Mühle (11), umfassend mehrere Kammern (12, 14), darunter eine erste Kammer (12) und eine letzte Kammer (14), wobei jede Kammer (12) von der benachbarten Kammer (14) durch eine Membran (17) getrennt ist,
        wodurch eine Zusammensetzung β die das hydraulische Bindemittel und die Zusammensetzung B umfasst, in der ersten Kammer (12) erlangt wird,

    b) Zerkleinern der Zusammensetzung β in der horizontalen Mühle (11), wodurch die Zusammensetzung β von der ersten Kammer (12) in die letzte Kammer (14) gelangt und am Ausgang der letzten Kammer (14) eine zerkleinerte Zusammensetzung C erlangt wird,

    **dadurch gekennzeichnet, dass** es während des Zerkleinerungsschritts das Einbringen einer Zusammensetzung A, die mindestens ein Mahlmittel A umfasst, umfassend einen Aminoalkohol, in die letzte Kammer (14) umfasst, wobei sich die Zusammensetzung A von der Zusammensetzung β unterscheidet.

2. Zerkleinerungsverfahren von hydraulischem Bindemittel nach Anspruch 1, umfassend nach Schritt b):

    c) Trennen der zerkleinerten Zusammensetzung C durch einen Separator (23) in Feingut und Überlauf des Separators, wobei die durchschnittliche Teilchengröße des Überlaufs des Separators größer ist als die der Teilchen des Feinguts,
    d) Rückgewinnen von Feingut,
    e) Rückführen des Überlaufs aus dem Separator in die erste Kammer (12) der horizontalen Mühle (11).

3. Zerkleinerungsverfahren von hydraulischem Bindemittel nach Anspruch 1 oder 2, wobei die horizontale Mühle (11) nur zwei Kammern (12, 14) aufweist.

4. Zerkleinerungsverfahren von hydraulischem Bindemittel nach einem der Ansprüche 1 bis 3, wobei das hydraulische Bindemittel Zement ist, optional umfassend mineralische Zusätze.

5. Zerkleinerungsverfahren von hydraulischem Bindemittel nach einem der Ansprüche 1 bis 4, wobei das Mahlmittel B ein Polyol umfasst, vorzugsweise ausgewählt aus:

    - Diol, wie beispielsweise Alkylenglykol, umfassend vorzugsweise 1 bis 20 Kohlenstoffatome, insbesondere 1 bis 10 Kohlenstoffatome, und dessen Alkylengruppe methyliert sein kann, und das normalerweise ausgewählt ist aus 2-Methyl-1,3-propandiol, Monoethylenglycol, Diethylenglycol, Triethylenglycol, Tetraethylenglycol, Propylenglycol und einem Gemisch davon,
    - Triol, vorzugsweise Glycerin, und
    - Tetraol, vorzugsweise Erythritol,
    oder einem Gemisch davon,
    wobei das Mahlmittel B vorzugsweise Alkylenglykol umfasst, umfassend vorzugsweise 1 bis 20 Kohlenstoffatome oder ein Gemisch davon, und optional Glycerin.

6. Zerkleinerungsverfahren von hydraulischem Bindemittel nach einem der Ansprüche 1 bis 5, wobei das Mahlmittel B Folgendes umfasst:

    - einen Aminoalkohol oder ein Salz davon, wobei der Aminoalkohol insbesondere Folgendes umfasst:

        - von 2 bis 8 Kohlenstoffatome, insbesondere von 4 bis 6 Kohlenstoffatome, und/oder
        - 1, 2 oder 3 Alkoholfunktionen,
        wobei der Aminoalkohol vorzugsweise N-Methyldiethanolamin (MDEA), Diisopropanolamin (DIPA), Triisopropanolamin (TIPA), Triethanolamin (TEA), Ethanoldiisopropanolamin (EDIPA), Diethanolisopropanolamin (DEIPA) oder ein Gemisch davon ist, und

- optional eine Carbonsäure oder ein Salz davon, beispielsweise ausgewählt aus Essigsäure oder einem ihrer Salze, Ameisensäure oder einem ihrer Salze oder einem Gemisch davon.

**7.** Zerkleinerungsverfahren von hydraulischem Bindemittel nach einem der Ansprüche 1 bis 6, wobei der Aminoalkohol des Mahlmittels A Folgendes umfasst:

- von 2 bis 8 Kohlenstoffatome, insbesondere von 4 bis 6 Kohlenstoffatome, und/oder
- 1, 2 oder 3 Alkoholfunktionen,

wobei der Aminoalkohol vorzugsweise N-Methyldiethanolamin (MDEA), Diisopropanolamin (DIPA), Triisopropanolamin (TIPA), Triethanolamin (TEA), Ethanoldiisopropanolamin (EDIPA), Diethanolisopropanolamin (DEIPA) oder ein Gemisch davon ist.

**8.** Zerkleinerungsverfahren von hydraulischem Bindemittel nach einem der Ansprüche 1 bis 7, wobei die Zusammensetzung A in die letzte Kammer eingebracht wird:

sei es auf Ebene der Membran, die die letzte Kammer von der benachbarten Kammer trennt,
oder in der Umschließung der letzten Kammer, in einem Bereich, der vorzugsweise näher an der Membran liegt, die die letzte Kammer von der benachbarten Kammer trennt, als am Ausgang der letzten Kammer,
oder am Ausgang der letzten Kammer, vorzugsweise an dem Abzugsgitter, mit dem der Ausgang der letzten Kammer versehen ist.

**9.** Mahleinheit, die für die Durchführung des Verfahrens nach einem der Ansprüche 1 bis 8 bestimmt ist, umfassend:

- eine Quelle (18) von hydraulischem Bindemittel,
- eine Quelle (19) einer Zusammensetzung B, umfassend mindestens ein Mahlmittel B,
- eine Quelle (20) einer Zusammensetzung A, umfassend mindestens ein Mahlmittel A, umfassend einen Aminoalkohol,
- eine horizontale Mühle (11), umfassend mehrere Kammern (12, 14), wobei eine erste Kammer (12) mit mindestens einem Einlass (13) und eine letzte Kammer (14) mit einem Auslass (16) versehen ist, wobei jede Kammer (12) von der benachbarten Kammer (14) durch eine Membran (17) getrennt ist,

**dadurch gekennzeichnet, dass** die letzte Kammer (14) mit einem Eingang (15) versehen ist, der mit der Quelle (20) der Zusammensetzung A verbunden ist.

**10.** Mahleinheit nach Anspruch 9, wobei der Ausgang (16) der letzten Kammer (14) mit dem Eingang (22) eines Separators (23) verbunden ist, der in der Lage ist, die Teilchen nach ihrer Korngröße zu trennen und mit zwei Ausgängen (24, 25) versehen ist, wobei einer der Ausgänge (24) mit einem Eingang (13) der ersten Kammer (12) der horizontalen Mühle (11) verbunden ist.

## Claims

**1.** A method for grinding a hydraulic binder, comprising:

a) introducing:

- a hydraulic binder, and
- a composition B comprising at least one grinding aid B,

into the first chamber (12) of a horizontal grinder (11) comprising several chambers (12, 14), including a first chamber (12) and a last chamber (14), each chamber (12) being separated from the adjacent chamber (14) by a diaphragm (17),
whereby a composition β comprising the hydraulic binder and composition B is obtained in the first chamber (12),

b) grinding composition β in the horizontal grinder (11), whereby composition β moves from the first chamber (12) to the last chamber (14) and a ground composition C is obtained at the outlet of the last chamber (14),

**characterised in that**, at the grinding step, it comprises introducing into the last chamber (14) a composition A comprising at least one grinding aid A comprising an aminoalcohol, composition A differing from composition β.

**2.** The method for grinding a hydraulic binder according to claim 1, comprising after step b):

c) separating, by a separator (23), composition C ground into fines and separator rejects, where the mean size of the particles of the separator rejects is greater than that of the particles of the fines;
d) recovering the fines;
e) returning the separator rejects to the first chamber (12) of the horizontal grinder (11).

**3.** The method for grinding a hydraulic binder according to claim 1 or 2, wherein the horizontal grinder (11) only has two chambers (12,14).

**4.** The method for grinding a hydraulic binder according to any of claims 1 to 3, wherein the hydraulic binder is cement optionally comprising mineral additions.

**5.** The method for grinding a hydraulic binder according to any of claims 1 to 4, wherein the grinding aid B comprises a polyol, preferably selected from among:

- a diol such as an alkylene glycol preferably having 1 to 20 carbon atoms, in particular 1 to 10 carbon atoms, the alkylene group possibly carrying a methyl and typically being selected from among 2-methyl-1,3-propanediol, le monoethyleneglycol, diethyleneglycol, triethyleneglycol, tetraethyleneglycol, propylene glycol and a mixture thereof,
- a triol, preferably glycerol, and
- a tetraol, preferably erythritol,

or a mixture thereof,
preferably the grinding aid B comprises an alkylene glycol preferably having 1 to 20 carbon atoms, or a mixture thereof, and optionally glycerol.

**6.** The method for grinding a hydraulic binder according to any of claims 1 to 5, wherein grinding aid B comprises:

- an aminoalcohol or one of the salts thereof, said aminoalcohol particularly comprising:

  - from 2 to 8 carbon atoms, in particular 4 to 6 carbon atoms, and/or
  - 1, 2 or 3 alcohol functions,

  the aminoalcohol preferably being N-methyldiethanolamine (MDEA), diisopropanolamine (DIPA), triisopropanolamine (TIPA), triethanolamine (TEA), ethanol-diisopropanolamine (EDIPA), diethanolisopropanolamine (DEIPA) or a mixture thereof, and
- optionally a carboxylic acid or salt thereof, selected for example from among acetic acid or one of the salts thereof, formic acid or one of the salts thereof, or a mixture thereof.

**7.** The method for grinding a hydraulic binder according to any of claims 1 to 6, wherein the aminoalcohol of grinding aid A comprises:

- from 2 to 8 carbon atoms, in particular 4 to 6 carbon atoms, and/or
- 1, 2 or 3 alcohol functions,

the aminoalcohol preferably being N-methyldiethanolamine (MDEA), diisopropanolamine (DIPA), triisopropanolamine (TIPA), triethanolamine (TEA), ethanol-diisopropanolamine (EDIPA), diethanolisopropanolamine (DEIPA) or a mixture thereof.

**8.** The method for grinding a hydraulic binder according to any of claims 1 to 7, wherein composition A is injected into the last chamber;

either at the diaphragm separating the last chamber from the adjacent chamber, or into the enclosure of the last chamber in a zone preferably closer to the diaphragm, separating the last chamber from the adjacent chamber, than to the outlet of the last chamber,
or at the outlet of the last chamber, preferably at the discharge grate equipping the outlet of the last chamber.

**9.** A grinding unit intended to implement the method according to any of claims 1 to 8, comprising:

- a source (18) of hydraulic binder,
- a source (19) of composition B comprising at least one grinding aid B,
- a source (20) of composition A comprising at least one grinding aid A comprising an aminoalcohol,
- a horizontal grinder (11) comprising several chambers (12,14), including a first chamber (12) equipped with at least one inlet (13) and a last chamber (14) equipped with an outlet (16), each chamber (12) being separated from the adjacent chamber (14) by a diaphragm (17),

**characterized in that** the last chamber (14) is equipped with an inlet (15) connected to the source (20) of composition A.

**10.** The grinding unit according to claim 9, wherein the outlet (16) of the last chamber (14) is connected to the inlet (22) of a separator (23) able to separate particles according to their particle size and equipped with two outlets (24,25), one of the outlets (24) being connected to an inlet (13) of the first chamber (12) of the horizontal grinder (11).

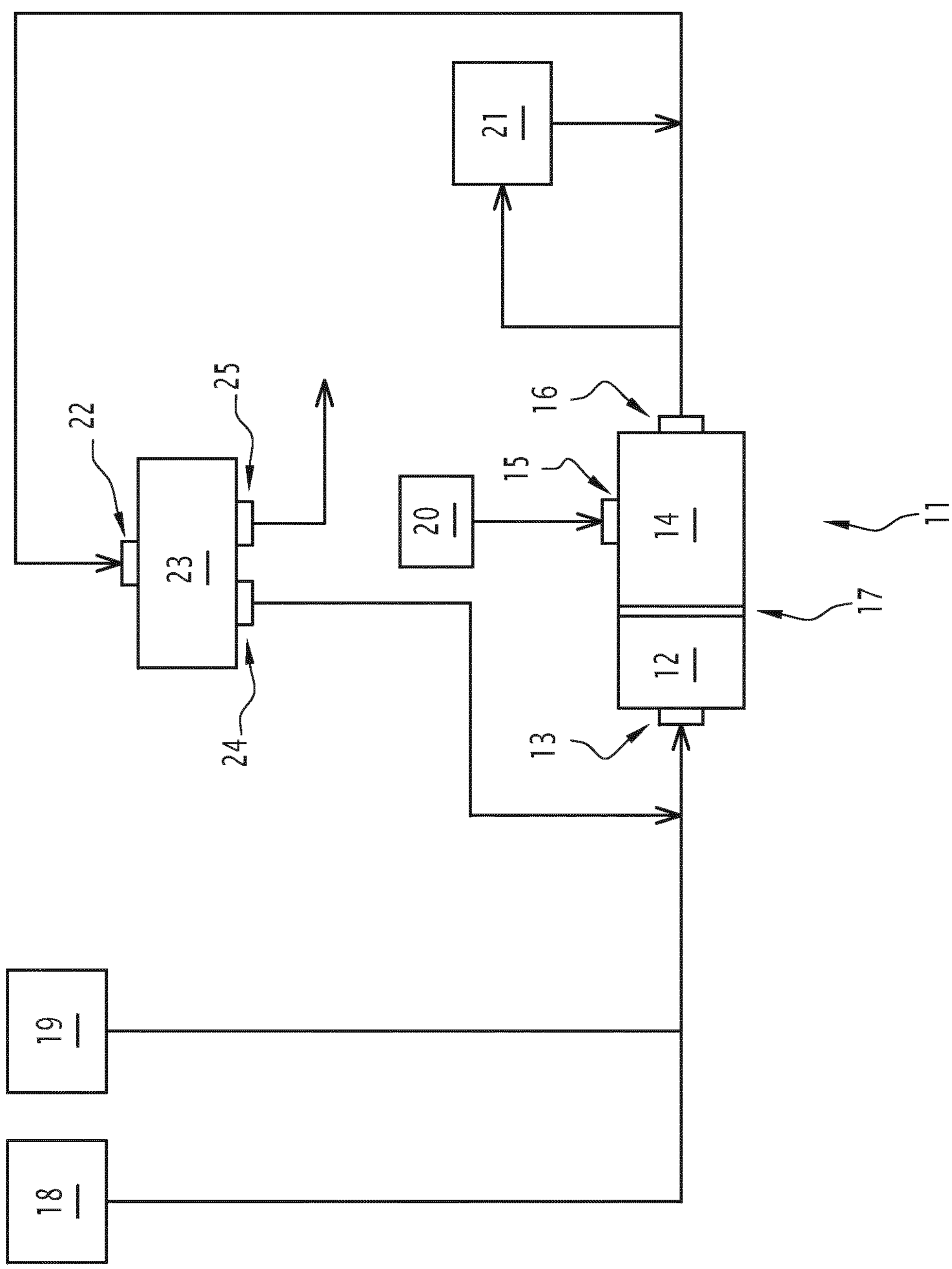


FIG.1

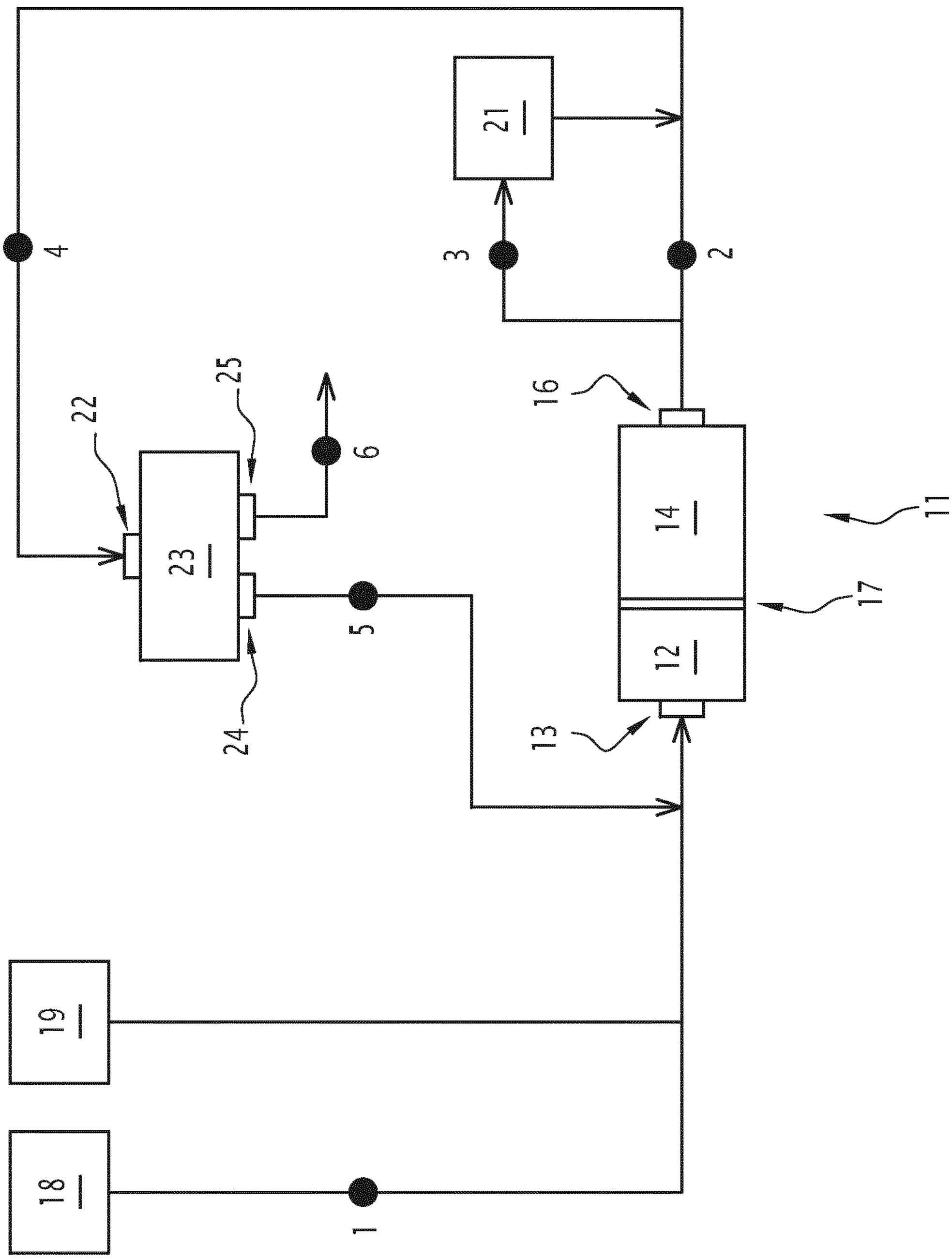


FIG.2

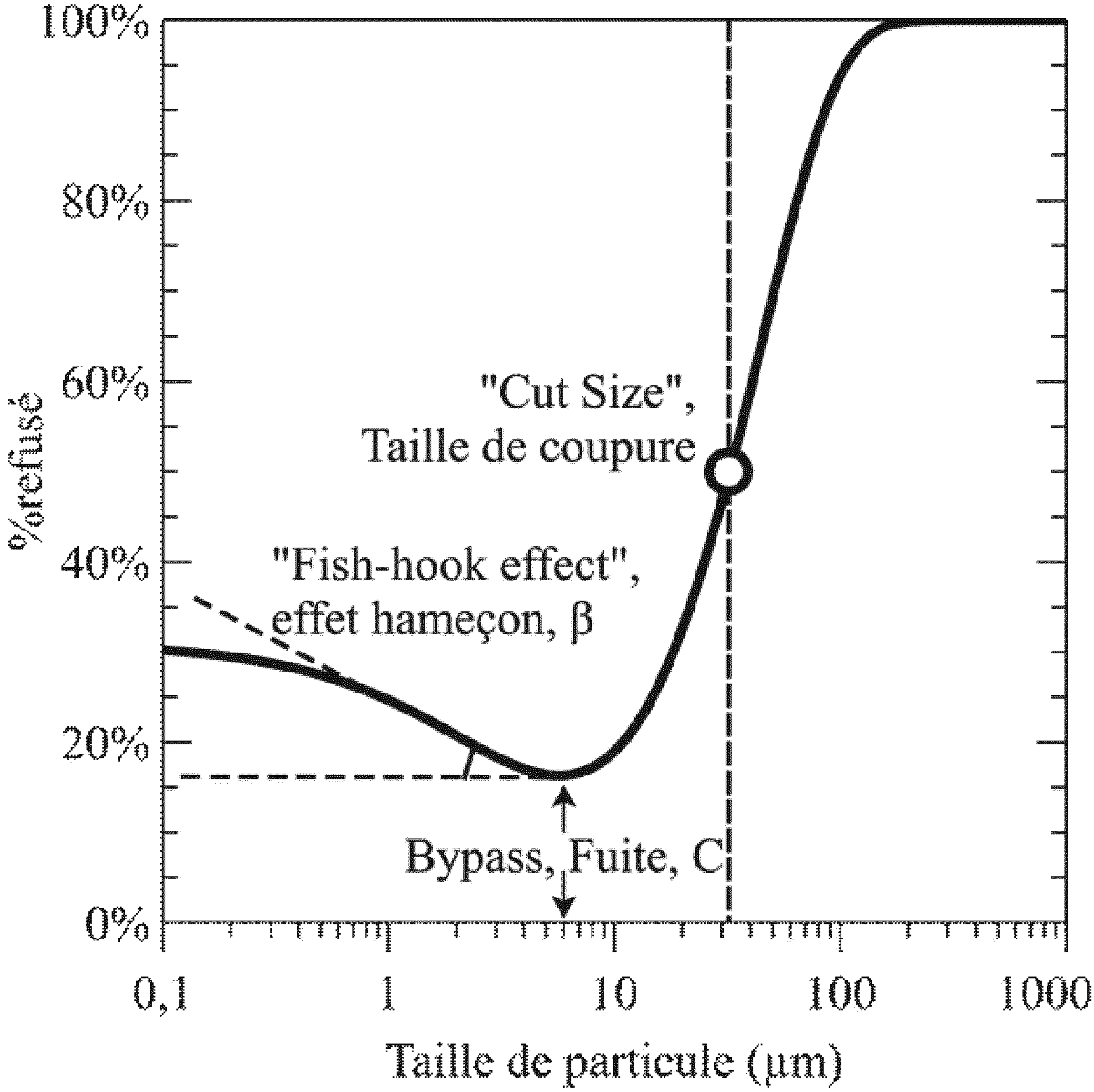
100%
80%
60%
40%
20%
0%
%refusé
"Cut Size",
Taille de coupure
"Fish-hook effect",
effet hameçon, β
Bypass, Fuite, C
0,1
1
10
100
1000
Taille de particule (µm)

FIG.3

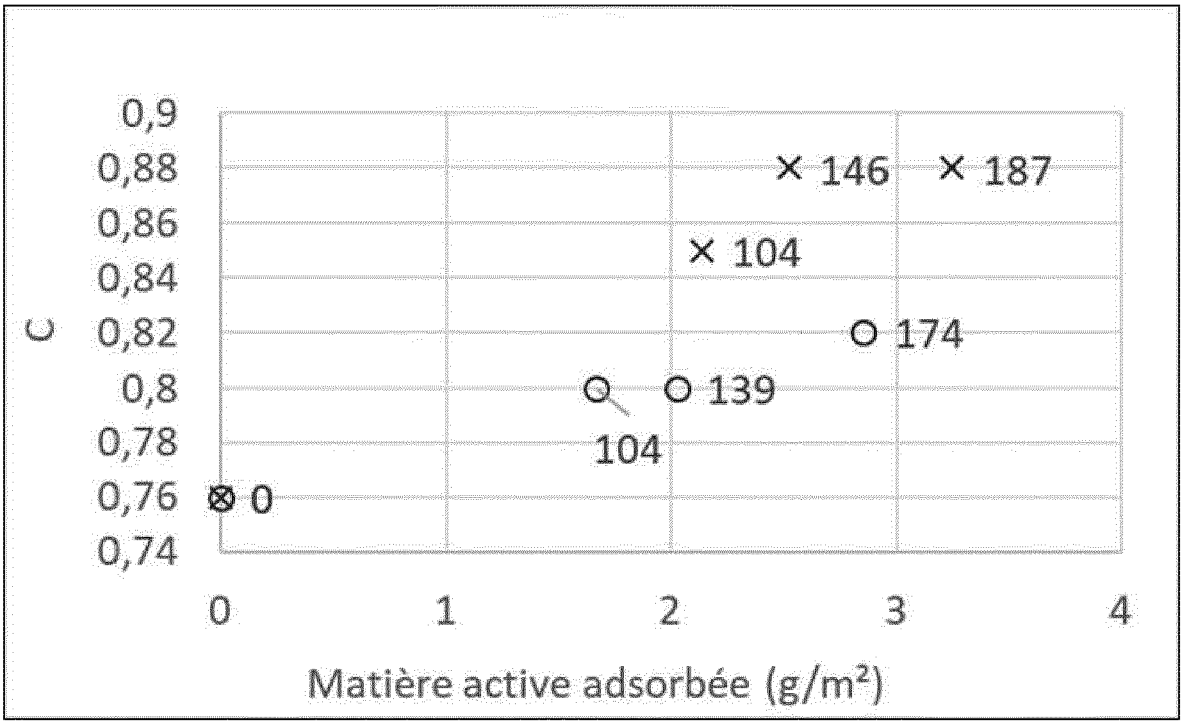
C
0,9
0,88
0,86
0,84
0,82
0,8
0,78
0,76
0,74
0
1
2
3
4
Matière active adsorbée (g/m²)
× 146
× 187
× 104
O 174
O 139
104
0

FIG.4

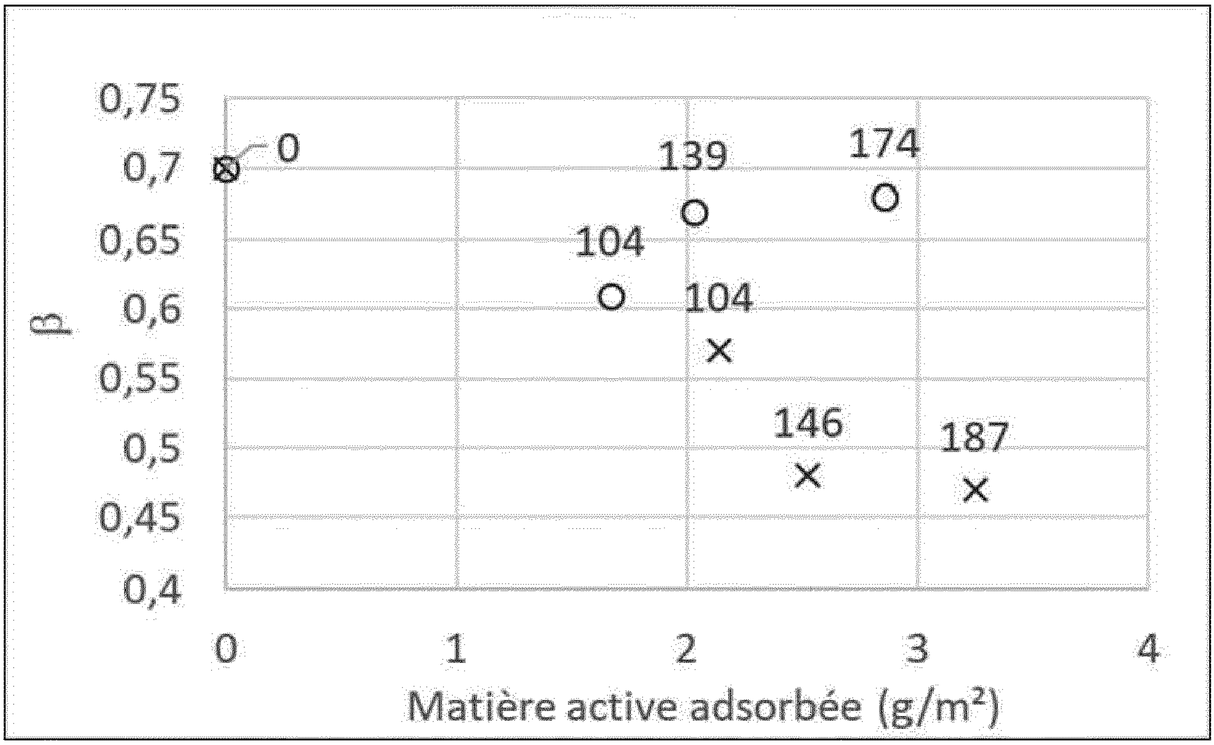
0,75
0,7
0,65
0,6
0,55
0,5
0,45
0,4
β
0
139
174
104
104
146
187
0
1
2
3
4
Matière active adsorbée (g/m²)

FIG.5

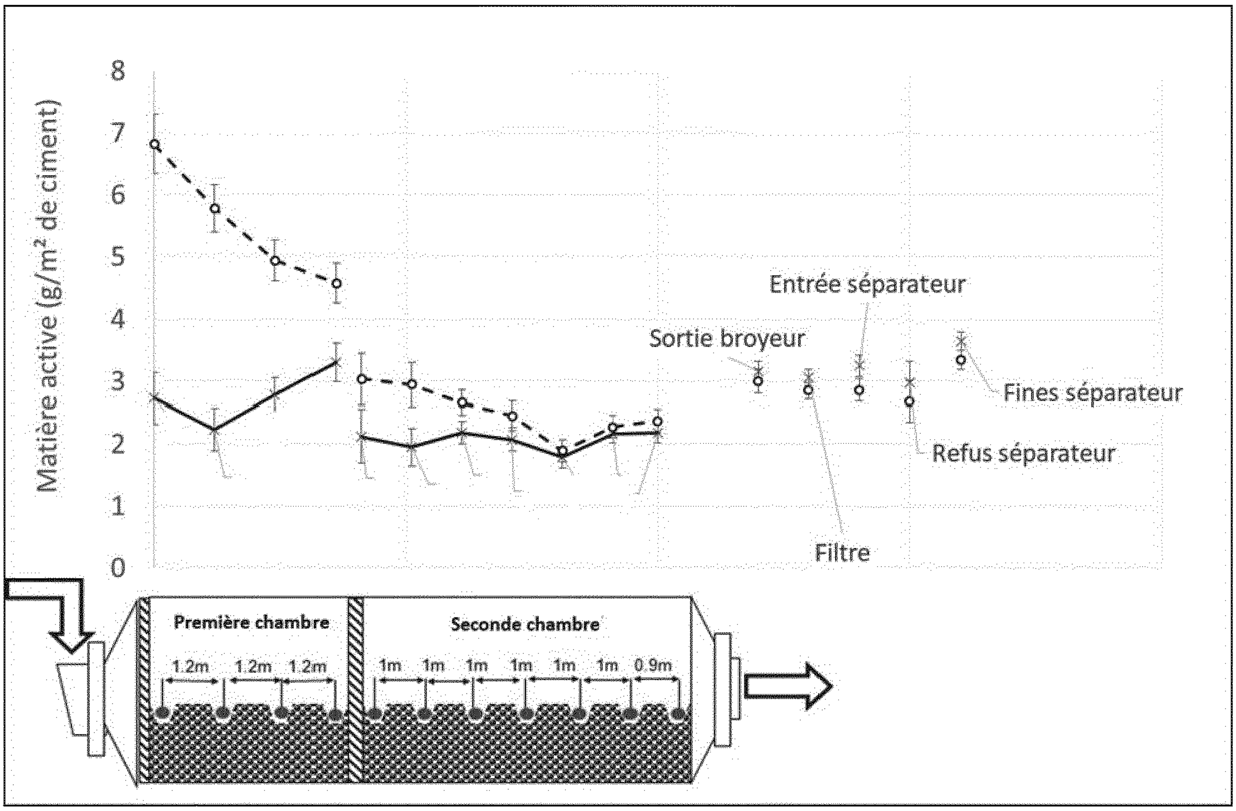

Matière active (g/m² de ciment)
8
7
6
5
4
3
2
1
0
Entrée séparateur
Sortie broyeur
Fines séparateur
Refus séparateur
Filtre
Première chambre
Seconde chambre
1.2m
1.2m
1.2m
1m
1m
1m
1m
1m
1m
0.9m


FIG.6

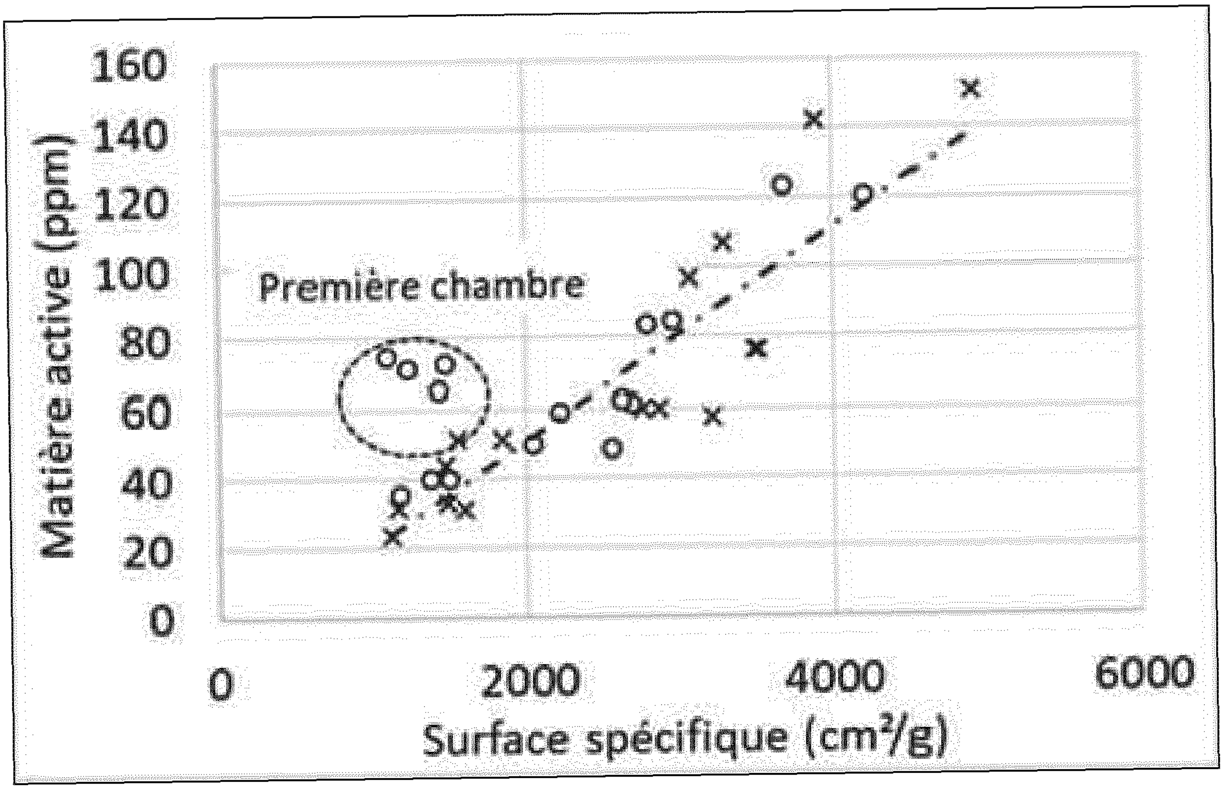
160
140
120
100
80
60
40
20
0
Matière active (ppm)
Première chambre
0
2000
4000
6000
Surface spécifique (cm²/g)

FIG.7

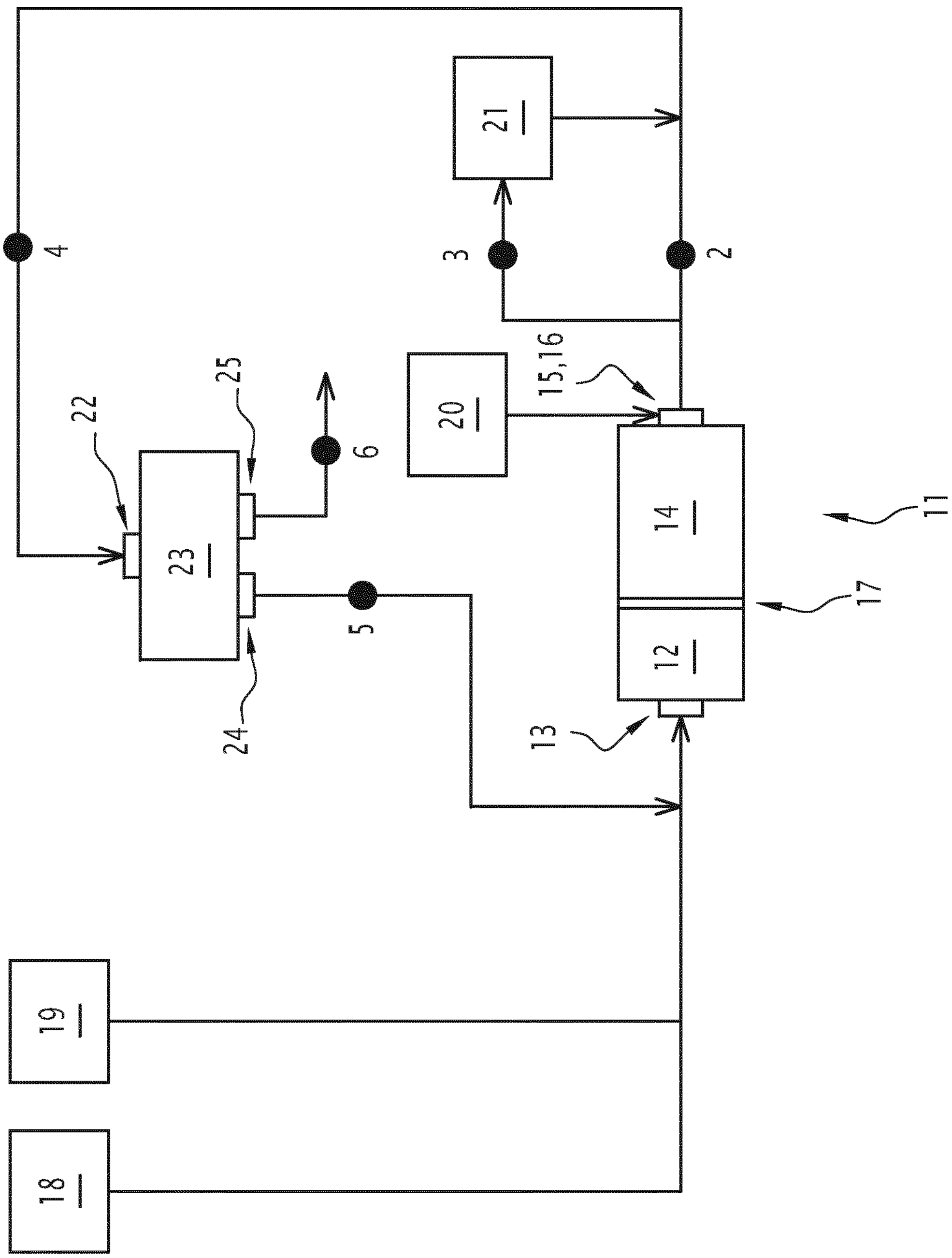


FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2017226011 A
- US 3776477 A